# EUROPEAN PATENT SPECIFICATION

(11) **EP 4 582 906 B1**
(45) Date of publication and mention of the grant of the patent: **06.05.2026**
(21) Application number: 23872894.3
(22) Date of filing: 15.09.2023
(51) Int. Cl.: G06F 3/01, G06T 19/00, G06T 3/40, G06F 3/00, G06F 3/04817, G06F 3/04842, G06F 1/16, G06F 3/0482, G06F 3/0484

(54) **AUGMENTED REALITY OBJECT DISPLAY METHOD AND ELECTRONIC DEVICE SUPPORTING SAME**
VERFAHREN ZUR ANZEIGE VON OBJEKTEN DER ERWEITERTEN REALITÄT UND ELEKTRONISCHE VORRICHTUNG ZUR UNTERSTÜTZUNG DAVON
PROCÉDÉ D'AFFICHAGE D'OBJET DE RÉALITÉ AUGMENTÉE ET DISPOSITIF ÉLECTRONIQUE LE PRENANT EN CHARGE

(30) Priority: 26.09.2022 KR 20220121312; 19.10.2022 KR 20220135082
(43) Date of publication of application: 09.07.2025
(73) Proprietor: Samsung Electronics Co., Ltd., Suwon-si, Gyeonggi-do 16677 (KR)
(72) Inventor: PARK, Daekeun, Suwon-si Gyeonggi-do 16677 (KR)
(74) Representative: Gulde & Partner
(86) International application number: PCT/KR2023/013959
(87) International publication number: WO 2024/071776

(56) References cited:
- JP-A- 2020 017 006
- KR-A- 20080 069 061
- KR-A- 20120 040 407
- KR-A- 20190 068 880
- KR-B1- 102 393 299
- US-A1- 2020 027 201
- US-A1- 2021 092 472
- US-A1- 2021 400 174
- US-A1- 2022 155 861
- US-B1- 11 423 621

## Description

### [Technical Field]

Embodiments of the disclosure relate to a method of displaying an augmented reality object, and an electronic device supporting the method.

### [Background Art]

In response to the advance of digital convergence in which various information and communication technologies are combined, electronic devices provide various functions or services associated with pivotal functions of the electronic devices. For example, the electronic devices may provide an Augmented Reality (AR) environment, as part of efforts to promote user convenience or interaction with users. The AR environment may support diverse user experiences of a real world, since a virtual AR object is displayed in an overlaid manner on a scene of the real world or an image captured from the scene of the real world.
US11423621B1 discloses a method, which involves displaying the augmented reality by a computing device, where a to-be-displayed virtual content with a scene of a real-world environment is determined. The image for depicting the virtual content is generated, where the image is provided with the first characteristics. The second characteristics of the scene of the real-world environment is detected using the sensors. The visually-enhanced image for depicting the virtual content is generated by applying the visual enhancement to the virtual content depicted in the image. The brightness of the scene of the real-world environment is reduced.

The aforementioned content may be provided as background technologies for aiding understanding of the disclosure.

### [Disclosure of Invention]

### [Solution to Problem]

An electronic device according to an embodiment of the disclosure may include at least one camera, a display, and at least one processor electrically coupled to the at least one camera and the display.

According to an embodiment, the at least one processor may be configured to acquire an image by using the at least one camera, based on that the image is acquired, identify at least one of a count of an Augmented Reality (AR) object to be displayed by using the display and a ratio of a display area of the AR object to a resolution of the display, based on that the at least one of the count of AR object and the ratio of the display area of the AR object are greater than or equal to a predetermined first threshold, determine to display the AR object as an outline by using the display, based on that the AR object is determined to be displayed as the outline, determine at least one first representative pixel value for the AR object, determine a second representative pixel value for presenting a first region of the image corresponding to a display position of the AR object by using the display, based on that a difference between the at least one first representative pixel value and the second representative pixel value is not included in a predetermined threshold range, display the AR object as the outline in accordance with a first display attribute which uses the at least one first representative pixel value by using the display, and based on that the difference between the at least one first representative pixel value and the second representative pixel value is included in the predetermined threshold range, display the AR object as the outline in accordance with a second display attribute different from the first display attribute by using the display.

A method of displaying an AR object of an electronic device according to an embodiment of the disclosure may include, by at least one processor of the electronic device, acquiring an image by using at least one camera of the electronic device, based on that the image is acquired, identifying at least one of a count of the AR object to be displayed by using the display of the electronic device and a ratio of a display area of the AR object to a resolution of the display, based on that the at least one of the count of AR object and the ratio of the display area of the AR object are greater than or equal to a predetermined first threshold, determining to display the AR object as an outline by using the display, based on that the AR object is determined to be displayed as the outline, determining at least one first representative pixel value for the AR object, determining a second representative pixel value for presenting a first region of the image corresponding to a display position of the AR object by using the display, based on that a difference between the at least one first representative pixel value and the second representative pixel value is not included in a predetermined threshold range, displaying the AR object as the outline in accordance with a first display attribute which uses the at least one first representative pixel value by using the display, and based on that the difference between the at least one first representative pixel value and the second representative pixel value is included in the predetermined threshold range, displaying the AR object as the outline in accordance with a second display attribute different from the first display attribute by using the display.

### [Brief Description of Drawings]

FIG. 1a illustrates an example of an electronic device according to an embodiment;
FIG. 1b illustrates an example of an electronic device according to an embodiment;
FIG. 2 illustrates an example of an electronic device according to an embodiment;
FIG. 3 illustrates an image acquired by using a camera according to an embodiment;
FIG. 4 illustrates an Augmented Reality (AR) object to be displayed by using a display according to an embodiment;
FIG. 5 illustrates one region of an image corresponding to a display position of an AR object according to an embodiment;
FIG. 6 illustrates an AR object displayed as an outline by using a display according to an embodiment;
FIG. 7 illustrates an AR object displayed by combining an outline and an image by using a display according to an embodiment;
FIG. 8 illustrates a method of displaying an AR object of an electronic device according to an embodiment; and
FIG. 9 is a block diagram of an electronic device in a network environment according to an embodiment.

With regard to the description of the drawings, the same or similar reference numerals may be used to refer to the same or similar elements.

### [Mode for the Invention]

When an Augmented Reality (AR) environment is provided in a case where a count of an AR object displayed (or to be displayed) through a display is great or in a case where a display area occupied by the AR object is large, visibility of a scene of a real world or an image captured from the scene of the real world (hereinafter, referred to as an image of the real world) may be impaired.

In addition, when a color of the AR object is similar to a color of the image of the real world or the scene of the real world corresponding to a display position of the AR object, visibility for the AR object may be impaired.

Embodiments of the disclosure may provide a method of displaying an AR object and an electronic device supporting the method, in which the AR object is displayed as an outline (or a border) in accordance with an attribute (e.g., a count and/or a display area) of the AR object, thereby improving visibility for a scene of a real world or an image of the real world.

In addition, embodiments of the disclosure may provide a method of displaying an AR object and an electronic device supporting the method, in which a display attribute (e.g., a color, a thickness, a brightness, and/or a saturation) of an outline is adjusted when the AR object is displayed as the outline, thereby improving visibility for the AR object.

Hereinafter, various embodiments of the disclosure are described with reference to the accompanying drawings. However, it should be appreciated that this is not intended to limit the technological features set forth herein to particular embodiments and include various modifications, equivalents, and/or alternatives for an embodiment of the disclosure.

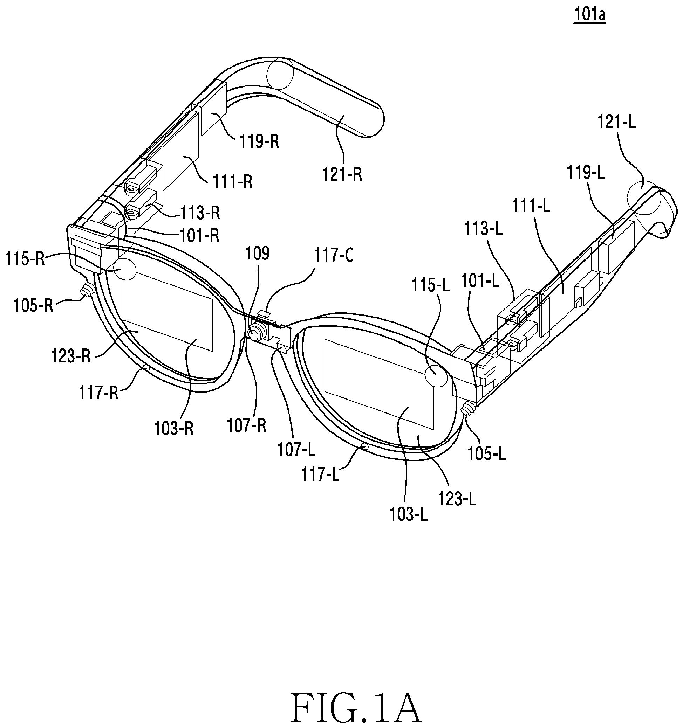

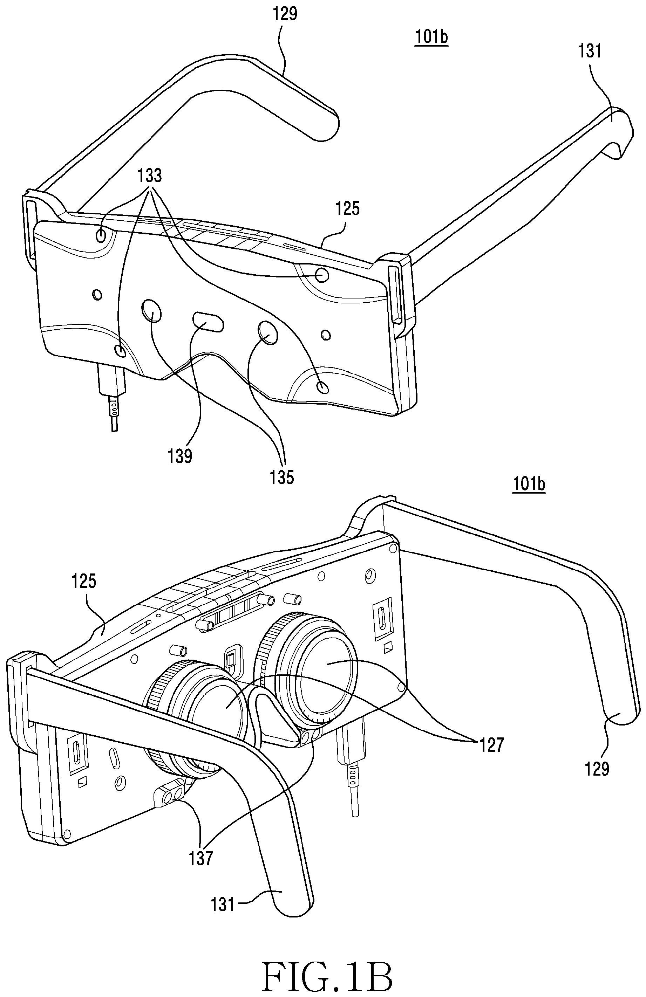

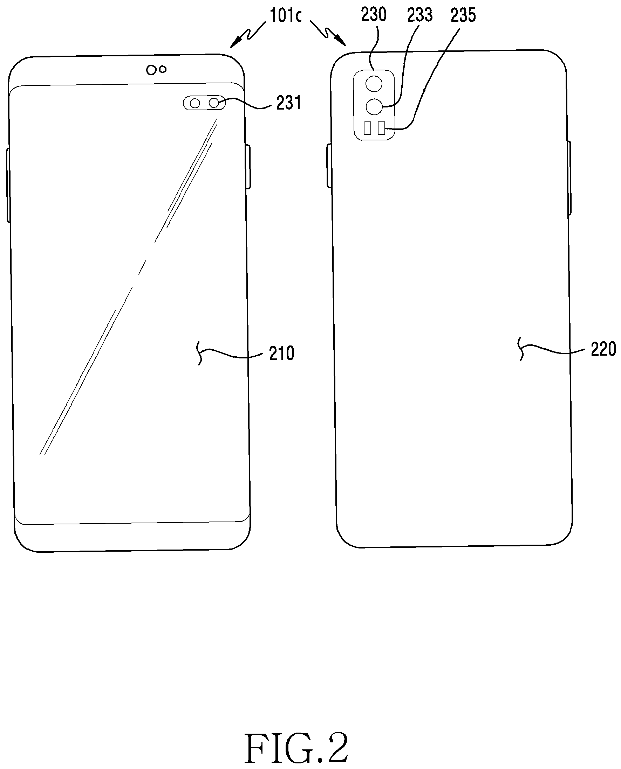

Hereinafter, a form factor of an electronic device to which embodiments of the disclosure are applicable is described with reference to FIG. 1a, FIG. 1b, and FIG. 2.

FIG. 1a illustrates an example of an electronic device according to an embodiment.

Referring to FIG. 1a, an electronic device 101a according to an embodiment may include smart glasses worn on a user's eye region. However, the electronic device 101a of FIG. 1a is illustrated as an example of the electronic device according to embodiments, and the disclosure is not limited to the electronic device having a form factor in the form of the smart glasses.

According to an embodiment, a physical state of the electronic device 101a may change based on hinges 113-L and 113-R. For example, the electronic device 101a may be in a state where at least one of temples of glasses is folded, or a state where the at least one of the temples is unfolded, through operations of the hinges 113-L and 113-R.

According to an embodiment, the electronic device 101a may include at least one of a first light output module 101-L, a second light output module 101-R, a first display 103-L, a second display 103-R, at least one of first cameras 105-L and/or 105-R, at least one of second cameras 107-L and/or 107-R, a third camera 109, a first Printed Circuit Board (PCB) 111-L, a second PCB 111-R, a first hinge 113-L, a second hinge 113-R, a first optical member 115-L, a second optical member 115-R, at least one of microphones 117-L, 117-R, and/or 117-C, at least one of speakers 119-L and/or 119-R, a first battery 121-L, a second battery 121-R, a first transparent member 123-L, and a second transparent member 123-R.

According to an embodiment, components of the electronic device 101a located to the left when wearing the electronic device 101a may be driven by power output from the first battery 121-L. Similarly, components of the electronic device 101a located to the right may be driven by power output from the second battery 121-R. Alternatively, the components of the electronic device 101a may be powered from a single battery which integrates the first battery 121-L and the second battery 121-R.

The components (e.g., the first PCB 111-L, the second PCB 111-R, the first hinge 113-L, the second hinge 113-R, the at least one of speakers 119-L and/or 119-R, the first battery 121-L, and the second battery 121-R) located at the temples of the glasses of FIG. 1a may be located inside the electronic device 101a and thus may not be exposed to the outside.

According to an embodiment, the first transparent member 123-L and the second transparent member 123-R may be constructed of transparent or translucent glass, plastic, or polymer materials, so that the user is able to see an external environment (e.g., a scene of a real world) in a state where the electronic device 101a is worn on a user's eye region. In addition, in the state where the electronic device 101a is worn on the user's eye region, the first transparent member 123-L may be disposed to correspond to a user's left eye, and the second transparent member 123-R may be disposed to correspond to a user's right eye.

According to an embodiment, the electronic device 101a may acquire (or capture) an image for the external environment (e.g., the scene of the real world) by using the third camera 109. The electronic device 101a may receive virtual AR content related to location information of the external environment or an object (e.g., a thing, a person, and/or a building) included in the acquired image, and may display the AR object on a user's watch by using at least one of the first light output module 101-L, the second light output module 101-R, the first optical member 115-L, the second optical member 115-R, the first display 103-L, and the second display 103-R.

According to an embodiment, the electronic device 101a may receive an audio signal by using the at least one of microphones 117-L, 117-R, and/or 117-C, and may output the received audio signal by using the at least one of speakers 119-L and/or 119-R.

According to an embodiment, the electronic device 101a may further include a first charging module (not shown) disposed on the first PCB 111-L. The electronic device 101a may charge the first battery 121-L through the first charging module. Similarly, the electronic device 101a may further include a second charging module (not shown) disposed on the second PCB 111-R, and may charge the second battery 121-R through the second charging module.

FIG. 1b illustrates an example of an electronic device according to an embodiment.

Referring to FIG. 1b, an electronic device 101b according to an embodiment may include a head mounted display device worn on a user's eye region. However, the electronic device 101b of FIG. 1b is illustrated as an example of the electronic device according to embodiments, and the disclosure is not limited to the electronic device having a form factor of the head mounted display device.

According to an embodiment, a physical state of the electronic device 101b may change based on a hinge (not shown). For example, the electronic device 101b may be in a state where at least one of temples joined (or coupled) to the head mounted display device is folded, or a state where the at least one of temples is unfolded, through an operation of the hinge.

In an embodiment, the electronic device 101b may include at least one of a display (not shown), a lens 127, wearing portions 129 and 131, at least one first camera 133, at least one second camera 135, at least one third camera 137, and a depth sensor 139.

According to an embodiment, the display may be disposed to an inner space of a main frame 125 and thus at least part thereof may be exposed to the outside and may be visible through the lens 127. In an embodiment, the display may include a liquid crystal display device, a digital mirror display device, or a silicon liquid crystal display device, and in this case, the electronic device 101b may include a light source which irradiates light to a screen output region of the display. In an embodiment, the display may include an organic light emitting diode device or micro organic light emitting diode device capable of generating light autonomously, and in this case, the electronic device 101b may not include a separate light source.

According to an embodiment, the lens 127 may adjust a focus so that a screen which is output through the display is visible on a user's watch. For example, a lens assembly including at least one lens may be disposed in an inner space of the main frame 125 at positions corresponding to user's left and right eyes. In addition, when the user wears the electronic device 101b, at least part of the lens 127 may be exposed to the outside through an inner face of the main frame 125 so that the user is able to see a screen output by the display.

According to an embodiment, the wearing portions 129 and 131 may be coupled (or joined) to one region of the main frame 125 through the hinge. Although the wearing portions 129 and 131 are exemplified as temples in an embodiment of FIG. 1b, the wearing portions 129 and 131 may be constructed in the form of a band having elasticity according to various embodiments.

According to an embodiment, the electronic device 101b may use the at least one first camera 133 to perform at least one of 3Dof or 6Dof head tracking, hand tracking, and space recognition. For example, the electronic device 101b may use the at least one first camera 133 to execute at least one of a space recognition function, a Simultaneous Localization and Mapping (SLAM) function for depth shooting, and a user gesture recognition function. According to an embodiment, the electronic device 101b may acquire (or capture) an image for an external environment (e.g., a scene of a real world) by using the at least one second camera 135. The at least one second camera 135 may include a color camera capable of executing, for example, at least one of an auto-focus function and a shaking-correction function. The electronic device 101b may receive location information of the external environment or Mixed Reality (MR) content related to an object (e.g., a thing, a person, and/or a building) included in the acquired image from an externa electronic device, and may display the MR object on a watch of a user by using the display and/or the lens 127. According to an embodiment, the electronic device 101b may detect and track a facial expression of the user wearing the electronic device 101b by using the at least one third camera 137.

According to an embodiment, the electronic device 101b may use the depth sensor 139 to measure a distance between the electronic device 101b and an object located in front of the electronic device 101b. For example, the depth sensor 139 may include a light emitting means and a light receiving means, and the electronic device 101b may acquire information on a distance to the object in such a manner that a Time Of Flight (TOF) is measured by using the light emitting means and the light receiving means.

FIG. 2 illustrates an example of an electronic device according to an embodiment.

Referring to FIG. 2, an electronic device 101c according to an embodiment may include a smart phone or an imaging device. However, the electronic device 101c of FIG. 2 is illustrated as an example of an electronic device according to an embodiment, and the disclosure is not limited to an electronic device having a form factor in the form of the smart phone or the imaging device.

According to an embodiment, a display 210 may be disposed to a front face of the electronic device 101c. For example, the display 210 may be disposed to occupy a most of the front face of the electronic device 101c and thus at least part thereof may be exposed to the outside.

In an embodiment, at least one front camera 231 may be disposed to the front face of the electronic device 101c. For example, the at least one front camera 231 may be disposed below the display 210, and at least part thereof may be exposed to the outside through one region of the display 210. In an embodiment, the at least one front camera 231 may include a first front camera and a second front camera. The first front camera and the second front camera may be the same-type of cameras having the same specification (e.g., a pixel and/or a field of view), but may be implemented with cameras of different specifications. The electronic device 101c may support a function (e.g., 3D shooting and/or auto focus) related to a dual camera by using the first front camera and the second front camera.

In an embodiment, at least one rear camera 233 may be disposed to a rear face of the electronic device 101c. For example, at least part of the at least one rear camera 233 may be exposed to the outside through a camera region 230 formed on a rear cover 220 of the electronic device 101c. In an embodiment, the at least one rear camera 233 may include a first rear camera, a second rear camera, and a third rear camera. The first rear camera, the second rear camera, and the third rear camera may be implemented with cameras of different specifications. For example, at least one camera among the first rear camera, the second rear camera, and the third rear camera may differ from the other cameras in at least one of a field of view, a pixel, an aperture, whether to support an optical zoom function, whether to support a digital zoom function, whether to support an optical image stabilizer function, a type of a lens assembly, and an array of the lens assembly. In an embodiment, the first rear camera may be a general camera. The second rear camera may be a camera which supports wide shooting. The third camera may be a camera which supports telephoto shooting.

In an embodiment, a hardware component which assists image capturing may be further disposed to the camera region 23 0 of the electronic device 101c. For example, at least one flash 235 for providing a light source may be disposed to the camera region 230. In addition, for example, at least one sensor (e.g., a time-of-flight sensor, a depth sensor, a range sensor, a laser sensor, a photo diode pixel, and/or a stereo camera) for detecting a distance between a subject and the electronic device 101c may be disposed to the camera region 230.

According to an embodiment, the electronic device 101c may acquire (or capture) an image for an external environment (e.g., a scene of a real world) by using the at least one front camera 231 or the at least one rear camera 233, and may display the acquired image as a preview image by using the display 210. The electronic device 101c may acquire location information of the external environment or virtual AR content related to an object (e.g., a thing, a person, and/or a building) included in the acquired image from an external electronic device or a memory of the electronic device 101c, and may display the AR object on the preview image by using the display 210.

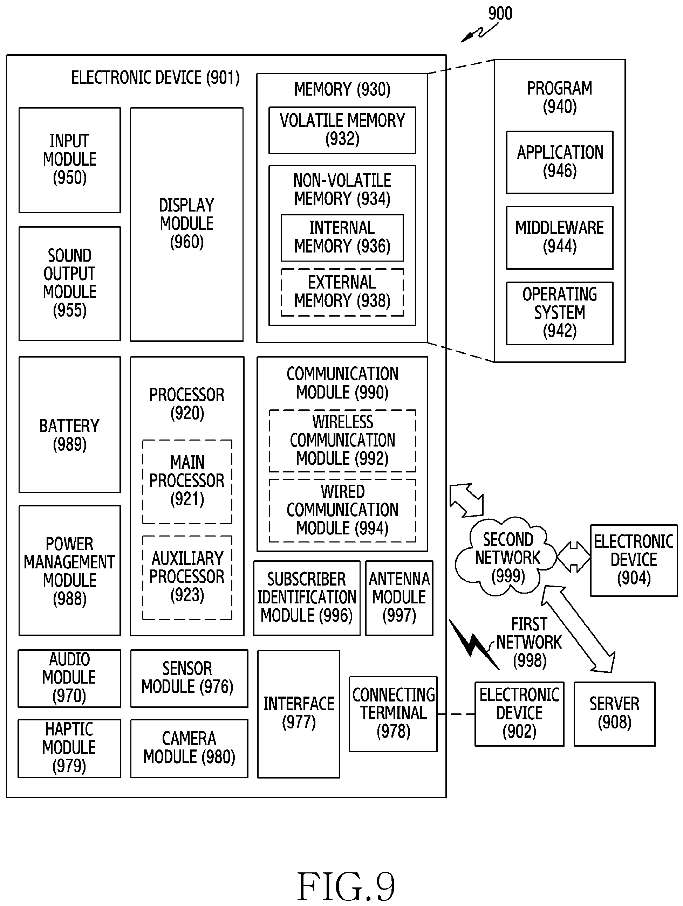

According to various embodiments, the electronic device 101a of FIG. 1a, the electronic device 101b of FIG. 1b, or the electronic device 101c of FIG. 2 may omit at least one of the aforementioned components, or may further include an additional component. For example, the electronic device 101a, 101b, or 101c (hereinafter, referred to as an electronic device 101) may correspond to an electronic device to be described with reference to FIG. 9 (e.g., an electronic device 901 of FIG. 9), and may further include at least some of the components included in the electronic device 901 of FIG. 9. Based on this, the at least one of cameras 105-L, 105-R, 107-L, 107-R, and/or 109 included in the electronic device 101a of FIG. 1a, the at least one of cameras 133, 135, and/or 137 included in the electronic device 101b of FIG. 1b, or the at least one of cameras 231 and/or 233 included in the electronic device 101c of FIG. 2 may correspond to a camera module 980 included in the electronic device 901 of FIG. 9. In addition, the displays 103-L and/or 103-R included in the electronic device 101a of FIG. 1a, a display (not shown) included in the electronic device 101b of FIG. 1b, or the display 210 included in the electronic device 101c of FIG. 2 may correspond to a display module 960 included in the electronic device 901 of FIG. 9.

According to various embodiments, the electronic device 101 may include at least one processing circuit electrically coupled to at least one camera (e.g., the camera module 980) and the display (e.g., the display module 960). For example, the electronic device 101 may include at least one of an application processor (e.g., a main processor 921 of FIG. 9), a communication processor (e.g., an auxiliary processor 923 of FIG. 9), an image signal processor included in the camera module 980, and a display driver integrated circuit included in the display module 960. Hereinafter, the at least one processing circuit included in the electronic device 101 may be collectively referred to as a processor.

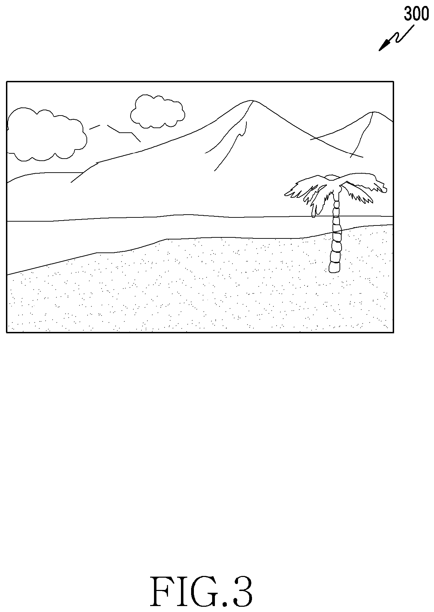

FIG. 3 illustrates an image acquired by using a camera according to an embodiment.

Referring to FIG. 3, a processor (e.g., a processor 902 of FIG. 9) of the electronic device 101 according to an embodiment may acquire (or capture) an image 300 by using at least one camera (e.g., the camera module 980 of FIG. 9). For example, the processor may execute an application supporting an image capture function and/or the at least one camera to acquire the image 300 presenting an external environment (e.g., a scene of a real world) in front of the at least one camera.

In an embodiment, the processor of the electronic device 101 (e.g., the electronic device 101a of FIG. 1a or the electronic device 101b of FIG. 1b) may not display the acquired image 300 through a display (e.g., the display module 960 of FIG. 9). For example, the image 300 may be stored in a memory (e.g., a memory 930 of FIG. 9), and an external environment (e.g., a scene of a real world) may be viewed through the display of the electronic device 101, transparent members (e.g., the first transparent member 123-L and second transparent member 123-R of FIG. 1), and/or a lens (e.g., the lens 127 of FIG. 1b).

In an embodiment, the processor of the electronic device 101 (e.g., the electronic device 101c of FIG. 2) may display the acquired image 300 through the display on a real-time basis. For example, the processor may store the acquired image 300 in the memory, and may display it as a preview image through the display.

According to an embodiment, a position of the external environment corresponding to the acquired image 300 or at least one object (e.g., a thing, a person, and/or a building) included in the image 300 may be related to at least one AR object (or AR content) for providing an AR environment or an MR environment to a user who wears or owns the electronic device 101.

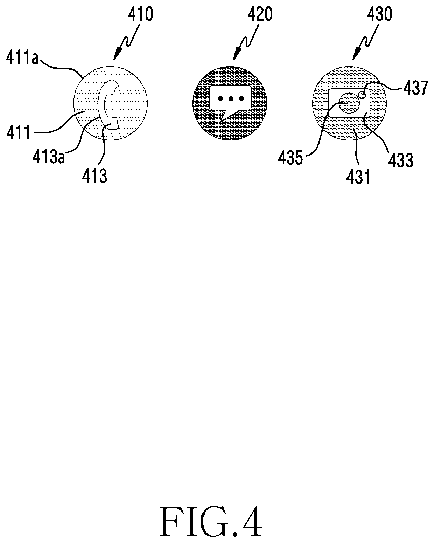

FIG. 4 illustrates an AR object to be displayed by using a display according to an embodiment.

Referring to FIG. 4, a processor (e.g., a processor 920 of FIG. 9) of the electronic device 101 according to an embodiment may identify at least one of AR objects 410, 420, and/or 430 to be displayed by using a display (e.g., the display module 960 of FIG. 9), based on that an image (e.g., the image 300 of FIG. 3) is acquired by using at least one camera (e.g., the camera module 980 of FIG. 9).

According to an embodiment, the processor may divide each of the at least one of AR objects 410, 420, and/or 430 into at least one section (or region), based on an outline (or a border) corresponding to each design or shape of the at least one of AR objects 410, 420, and/or 430. Taking the first AR object 410 for example, the first AR object 410 may be divided into a first section 413 defined by a first outline 413a and a second section 411 excluding a portion overlaid with a different section (e.g., the first section 413) among sections defined by a second outline 411a.

In an embodiment, the processor may identify at least one of a count of the at least one of AR objects 410, 420, and/or 430 to be displayed by using the display and a ratio of a display area of the at least one of AR objects 410, 420, and/or 430. For example, the processor may determine a total count of the at least one of AR objects 410, 420, and/or 430 by adding up the count of the at least one of AR objects 410, 420, and/or 430 to be displayed. In addition, for example, when the at least one of AR objects 410, 420, and/or 430 are displayed by using the display, the processor may determine the ratio of the display area of the at least one of AR objects 410, 420, and/or 430 by comparing a display area occupied by the at least one of AR objects 410, 420, and/or 430 with respect to a resolution of the display (or a size of a display region). According to an embodiment, the display area of the at least one of AR objects 410, 420, and/or 430 may be referred to as an extent (or a size, or the number of pixels) defined by an outermost outline (e.g., the second outline 411a) of a corresponding AR object (e.g., the first AR object 410). In an embodiment, the processor may compare a value obtained by adding up the display area of each of the at least one of AR objects 410, 420, and/or 430 with a resolution value of the display to determine the ratio of the display area of the at least one of AR objects 410, 420, and/or 430.

According to an embodiment, the processor may compare the count identified for the at least one of AR objects 410, 420, and/or 430 to be displayed by using the display and/or the ratio of the display area with a predetermined first threshold. For example, the processor may compare the count of the at least one of AR objects 410, 420, and/or 430 with a predetermined threshold count (e.g., 5). In addition, for example, the processor may compare the ratio of the display area of the at least one of AR objects 410, 420, and/or 430 with a predetermined threshold ratio (e.g., 20% against the resolution of the display).

In an embodiment, based on comparison between the predetermined first threshold and the count of the at least one of AR objects 410, 420, and/or 430 and/or the ratio of the display area, the processor may determine whether to display the at least one of AR objects 410, 420, and/or 430 as an outline by using the display. For example, based on that the count of the at least one of AR objects 410, 420, and/or 430 is greater than or equal to the predetermined threshold count, or based on that the ratio of the display area of the at least one of AR objects 410, 420, and/or 430 is greater than or equal to the predetermined threshold ratio, or based on that the count of the at least one of AR objects 410, 420, and/or 430 and ratio of the display area are respectively greater than or equal to the predetermined threshold count and threshold ratio, the processor may determine to display the at least one of AR objects 410, 420, and/or 430 as the outline. In addition, for example, based on that the count of the at least one of AR objects 410, 420, and/or 430 and the ratio of the display area are respectively less than the predetermined threshold count and threshold ratio, the processor may determine not to display the at least one of AR objects 410, 420, and/or 430 as the outline (or may determine to display it with an original image of the AR object).

In an embodiment, based on that the at least one of AR objects 410, 420, and/or 430 is determined to be displayed as the outline, the processor may determine at least one first representative pixel value for each of the at least one of AR objects 410, 420, and/or 430. For example, the processor may determine the first representative pixel value for each of the at least one section divided for each of the at least one of AR objects 410, 420, and/or 430. Taking the second AR objects 430 for example, the processor may determine each of a representative pixel value for a first section 431 of the second AR object 430, a representative pixel value for a second section 433, a representative pixel value for a third section 435, and a representative pixel value for a fourth section 437.

In an embodiment, based on an RGB value of a display pixel corresponding to a section of a corresponding AR object when displaying the corresponding AR object by using the display, the processor may determine a representative pixel value for at least one section of each of the at least one of AR objects 410, 420, and/or 430. Taking the first section 431 of the second AR object 430 for example, the processor may determine a representative pixel value of the first section 431 as a representative value (e.g., an RGB value with highest weight) or average value of RGB values for presenting the first section 431 when displaying the second AR object 430 by using the display. Alternatively, the processor may determine the representative pixel value for the first section 431 of the second AR object 430 as a YCbCr value converted by dividing the representative value or average value of the RGB values into a luminance component and a chrominance component.

In an embodiment, the representative pixel value determined for each of the at least one section of the AR object may be similar to or different from each other at least in part according to a color for presenting each of the at least one section. Taking the second AR object 430 for example, when a color for presenting the first section 431 of the second AR object 430 and a color for presenting the third section 435 are identical or similar, the representative pixel value determined for each of the sections 431 and 435 may be identical or similar.

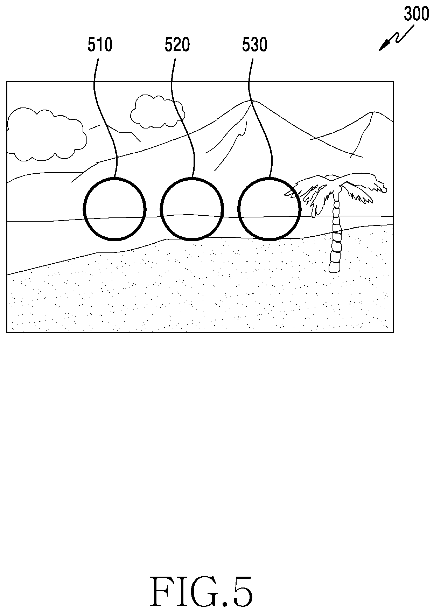

FIG. 5 illustrates one region of an image corresponding to a display position of an AR object according to an embodiment.

Referring to FIG. 5, based on that at least one first representative pixel value for each of at least one AR object (e.g., the at least one of AR objects 410, 420, and/or 430 of FIG. 4) is determined, a processor (e.g., the processor 920 of FIG. 9) of the electronic device 101 according to an embodiment may determine a second representative pixel value for the image 300 acquired through at least one camera (e.g., the camera module 980 of FIG. 9). For example, when displaying the at least one of AR objects 410, 420, and/or 430 and the image 300 by using a display (e.g., the display module 960 of FIG. 9), the processor may determine the second representative pixel value for each of first regions 510, 520, and/or 530 on the image 300 corresponding to (or overlaid with) a display position of each of the at least one of AR objects 410, 420, and/or 430.

In an embodiment, the at least one of AR objects 410, 420, and/or 430 may be displayed at a default position in the display region. In this case, the at least one of first regions 510, 520, and/or 530 on the image 300 may be determined as a region corresponding to the default position of the display region when the image 300 is displayed by using the display. Alternatively, a display position of the at least one of AR objects 410, 420, and/or 430 may be determined adaptively based on at least one of a position, size, and attribute of an object (e.g., a thing, a person, and/or a building) included in the image 300. In this case, the at least one of first regions 510, 520, and/or 530 on the image 300 may also be determined adaptively to correspond to the display position of the at least one of AR objects 410, 420, and/or 430.

In an embodiment, based on an RGB value of a display pixel corresponding to a corresponding first region when displaying the image 300 by using the display, the processor may determine a second representative pixel value for each of the at least one of first regions 510, 520, and/or 530,. For example, the processor may determine a representative value (e.g., an RGB value with highest weight) or average value of the RGB values for presenting the first region of the image 300 as the second representative pixel value of the corresponding first region. Alternatively, the processor may determine the second representative pixel value for each of the at least one of first regions 510, 520, and/or 530 as a YCbCr value converted by dividing the representative value or average value of the RGB values for presenting the first region into a luminance component and a chrominance component.

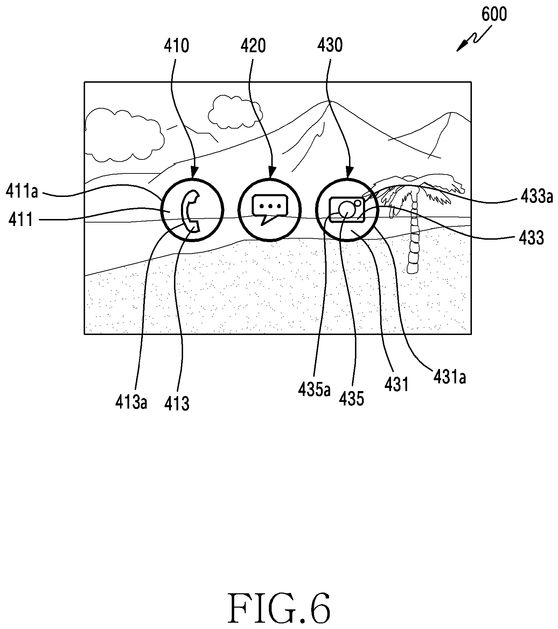

FIG. 6 illustrates an AR object displayed as an outline by using a display according to an embodiment.

Referring to FIG. 6, based on that at least one of a count of at least one of AR objects 410, 420, and/or 430 and a ratio of a display area are greater than or equal to a predetermined first threshold, a processor (e.g., the processor 920 of FIG. 9) of the electronic device 101 according to an embodiment may display the at least one of AR objects 410, 420, and/or 430 as an outline by using a display (e.g., the display module 960 of FIG. 9). Taking the first AR object 410 for example, the processor may display the first AR object 410 as the outline by using the first outline 413a defining the first section 413 and the second outline 411a defining the second section 411.

In an embodiment, a background 600 overlaid with the at least one of AR objects 410, 420, and/or 430 displayed as the outline may be an external environment (e.g., a scene of a real world) viewed through the display, transparent members (e.g., the first transparent member 123-L and second transparent member 123-R of FIG. 1a), and/or a lens (e.g., the lens 127 of FIG. 1b). Alternatively, the background 600 overlaid with the at least one of AR objects 410, 420, and/or 430 displayed as the outline may be an image (e.g., the image 300 of FIG. 3) presenting the external environment acquired by using at least one camera (e.g., the camera module 980 of FIG. 9). For example, the at least one of AR objects 410, 420, and/or 430 may be displayed on a first layer of the display, and the image 300 may be displayed on a second layer below the first layer of the display.

According to an embodiment, the processor may compare at least one first representative pixel value for each of the at least one of AR objects 410, 420, and/or 430 with a second representative pixel value of each of the at least one first region (e.g., the at least one of first regions 510, 520, and/or 530 of FIG. 5) on the image 300 corresponding to a display position of each of the at least one of AR objects 410, 420, and/or 430, in order to display each of the at least one of AR objects 410, 420, and/or 430 as the outline. Taking the first region 530 of the second AR object 430 and the image 300 corresponding to the display position of the second AR object 430 for example, the processor may compare the second representative pixel value for the first region 530 with each of the first representative pixel value for the first section 431 of the second AR object 430, the first representative pixel value of the second section 433, and the first representative pixel value for the third section 435.

In an embodiment, based on comparison between the first representative pixel value of each of the at least one of AR objects 410, 420, and/or 430 and the second representative pixel value of each of the at least one of first regions 510, 520, and/or 530 of the image 300 respectively corresponding to the at least one of AR objects 410, 420, and/or 430, the processor may display at least some of the at least one of AR objects 410, 420, and/or 430 as the outline based on a first display attribute or a second display attribute different from the first display attribute.

In an embodiment, based on that the difference between the first representative pixel value for the first section 431 of the second AR object 430 and the second representative pixel value for the first region 530 corresponding to the display position of the second AR object 430 is not included in a predetermined threshold range, the processor may display the first outline 431a defining the first section 431 of the second AR object 430 with the first display attribute which uses a color corresponding to the first representative pixel value determined for the first section 431. Similarly, based on that the difference between the first representative pixel value for the second section 433 of the second AR object 430 and the second representative pixel value of the first region 530 is not included in the predetermined threshold range, the processor may display the second outline 433a defining the second section 433 of the second AR object 430 with the first display attribute which uses a color corresponding to the first representative pixel value determined for the second section 433.

In an embodiment, based on that the difference between the first representative pixel value for the third section 435 of the second AR object 430 and the second representative pixel value of the first region 530 is included in the predetermined threshold range, the processor may display the third outline 435a defining the third section 435 of the second AR object 430 with the second display attribute. For example, the processor may display the third outline 435a defining the third section 435 of the second AR object 430 with the second display attribute which uses a color having a complementary color relationship with the first representative pixel value determined for the third section 435. In this regard, colors having the complementary color relationship may be defined in a memory (e.g., the memory 930 of FIG. 9) of the electronic device 101 in the form of a table or index, based on a color spectrum. In addition, for example, the processor may display the third outline 435a defining the third section 435 of the second AR object 430 with the second display attribute which uses a thicker thickness than another outline (e.g., the first outline 431a and/or the second outline 433a) displayed with the first display attribute. According to various embodiments, a thickness of the third outline 435a based on the second display attribute may be determined based on a ratio of a display area of the second AR object 430 to a resolution of the display (or a size of the display region), and may be adaptively adjusted upward or downward depending on the resolution of the display or the display area of the second AR object 430. In addition, for example, the processor may display the third outline 435a defining the third section 435 of the second AR object 430 with the second display attribute which uses a higher brightness or saturation than another outline (e.g., the first outline 431a and/or the second outline 433a) displayed with the first display attribute.

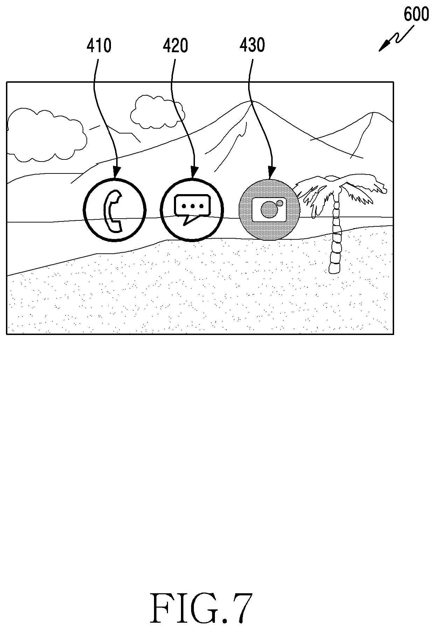

FIG. 7 illustrates an AR object displayed by combining an outline and an image by using a display according to an embodiment.

Referring to FIG. 7, based on that at least one of a count of at least one of AR objects 410, 420, and/or 430 and a ratio of a display area are greater than or equal to a predetermined first threshold, a processor (e.g., the processor 920 of FIG. 9) of the electronic device 101 according to an embodiment may determine whether the count of the at least one of AR objects 410, 420, and/or 430 and/or the ratio of the display area are greater than or equal to a second threshold greater than the predetermined first threshold.

In an embodiment, based on that the count of the at least one of AR objects 410, 420, and/or 430 and/or the ratio of the display area are greater than or equal to the predetermined first threshold, the processor may determine to display the at least one of AR objects 410, 420, and/or 430 as an outline. In addition, based on that the count of the at least one of AR objects 410, 420, and/or 430 and/or the ratio of the display area are greater than or equal to the predetermined second threshold, the processor may display all of the at least one of AR objects 410, 420, and/or 430 as the outline based on a third display attribute. For example, based on that the count of the at least one of AR objects 410, 420, and/or 430 and/or the ratio of the display area are determined to be greater than or equal to the predetermined second threshold, the processor may display outlines defining respective sections of the at least one of AR objects 410, 420, and/or 430 with a third display attribute which uses a color having a complementary color relationship with respect to a third representative pixel value (e.g., a representative value or average value of RGB values for presenting an image, or a YCbCr value converted from the representative value or average value of the RGB values) determined for the entire region of an acquired image. In addition, for example, based on that the at least one of the count of the at least one of AR objects 410, 420, and/or 430 and the ratio of the display area are determined to be greater than or equal to the predetermined second threshold, the processor may display the outlines defining the respective sections of the at least one of AR objects 410, 420, and/or 430 with the third display attribute which uses a predetermined color (e.g., white).

In various embodiments, after displaying (or while displaying) the at least one of AR objects 410, 420, and/or 430 as the outline based on at least one of the first display attribute, the second display attribute, and the third display attribute, the processor may convert an AR object (e.g., the second object 430) selected by a user from among the at least one of AR objects 410, 420, and/or 430 to an original image from the outline and display the converted image. For example, the processor may convert an AR object selected by a user input based on a voice, a touch, a gesture, and/or a gaze to the original image and display the converted image.

In various embodiments, in an operation of determining to display the at least one of AR objects 410, 420, and/or 430 as the outline, based on that the count of the at least one of AR objects 410, 420, and/or 430 and/or the ratio of the display area are greater than or equal to the predetermined first threshold, the processor may determine whether there is an AR object predetermined by a user among the at least one of AR objects 410, 420, and/or 430 or an AR object set by default in the electronic device 101. Based on that there is a predetermined (or set) AR object (e.g., the second AR object 430) among the at least one of AR objects 410, 420, and/or 430 determined to be displayed as the outline, the processor may display the predetermined AR object as an original image, and may display at least one different AR object (e.g., the first AR object 410 and/or the third AR object 420) as the outline based on the third display attribute. For example, the processor may display the at least one different AR object with the third display attribute which uses a predetermined color (e.g., gray), or may display it with the third display attribute which uses a color identical or similar to the second representative pixel value for the first region of the image 300 corresponding to (or overlaid with) a display position of the AR object.

According to various embodiments, upon identifying the at least one of AR objects 410, 420, and/or 430 to be displayed by using the display, the processor may determine at least one of the first display attribute, second display attribute, and third display attribute to be applied to the respective at least one of AR objects 410, 420, and/or 430 on a real-time basis, and may display the at least one of AR objects 410, 420, and/or 430, based on the at least one of the first display attribute, the second display attribute, and the third display attribute, according to the determination. Alternatively, upon identifying the at least one of AR objects 410, 420, and/or 430 to be displayed by using the display, the processor may display each of the at least one of AR objects 410, 420, and/or 430 to the display as an original image to be overlaid with the background 600 (e.g., a scene of a real world or the image 300 presenting the scene of the real world), and may display each of the at least one of AR objects 410, 420, and/or 430, based on at least one of the first display attribute, the second display attribute, and the third display attribute, when the displaying of the at least one of AR objects 410, 420, and/or 430 or a display position thereof is maintained to be greater than or equal to a predetermined 1 hour. Alternatively, upon identifying the at least one of AR objects 410, 420, and/or 430 to be displayed by using the display, the processor may monitor a field-of-view variation of at least one camera (e.g., the camera module 980 of FIG. 9), and may display each of the at least one of AR objects 410, 420, and/or 430, based on at least one of the first display attribute, the second display attribute, and the third display attribute, when the field-of-view variation of the at least one camera is maintained to be greater than or equal to predetermined 2 hours within a predetermined field-of-view range.

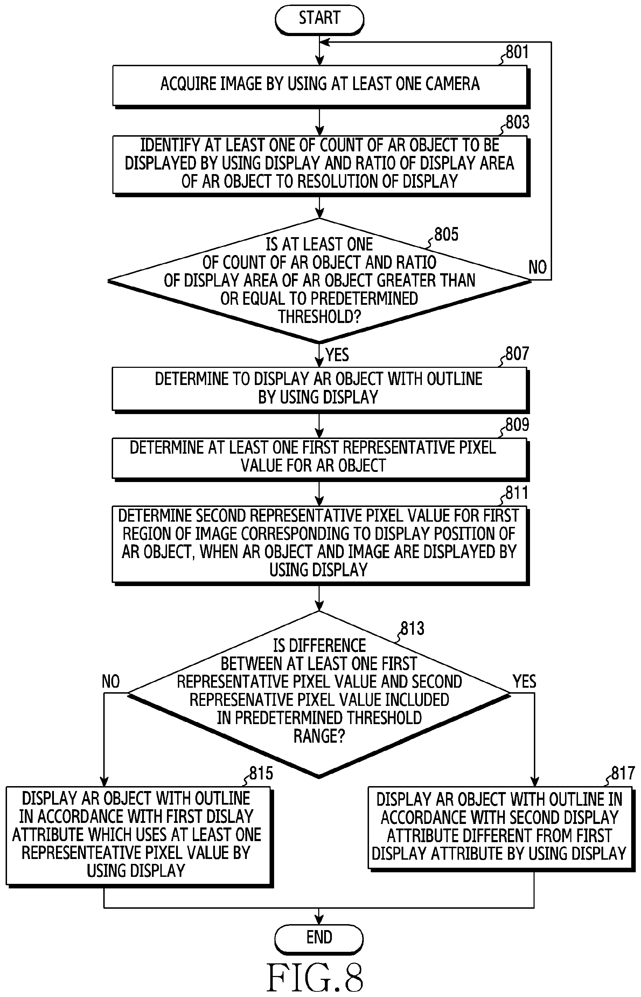

FIG. 8 illustrates a method of displaying an AR object of an electronic device according to an embodiment.

At least some of operations of the electronic device described with reference to FIG. 8 may be identical or similar to the operations of the electronic device described above with reference to FIG. 5, FIG. 6, or FIG. 7, and hereinafter, at least some of redundant descriptions for the identical or similar operations may be omitted. In addition, the operations of the electronic device described with reference to FIG. 8 may be performed by a processor of the electronic device by executing at least one instruction stored in a memory.

In addition, operations of the electronic device described with reference to FIG. 8 may be performed sequentially, but may not necessarily be performed sequentially. For example, orders of the operations described with reference to FIG. 8 may be changed, and at least two operations may be performed in parallel.

Referring to FIG. 8, in operation 801, a processor (e.g., the processor 920 of FIG. 9) of the electronic device 101 may acquire (or capture) an image by using at least one camera (e.g., the camera module 980 of FIG. 9). For example, the processor may execute an application supporting an image capture function and/or the at least one camera to acquire an image presenting an external environment (e.g., a scene of a real world) in front of the at least one camera.

In operation 803, based on that the image is acquired, the processor may identify at least one AR object to be displayed by using a display (e.g., the display module 960 of FIG. 9). For example, the processor may identify at least one of a count of at least AR object to be displayed and a ratio of a display area occupied by the at least one AR object to a resolution of the display (or a size of a display region).

In operation 805, the processor may compare the identified at least one of the count and ratio of the display area for the at least one AR object to be displayed with a predetermined first threshold. For example, the processor may compare the count of the at least one AR object with a predetermined threshold count and compare the ratio of the display area of the at least one AR object with a predetermined threshold ratio. Based on the comparison, the processor may determine whether the at least one of the count of the at least one AR object and the ratio of the display area are greater than or equal to the predetermined first threshold.

In an embodiment, based on that the at least one of the count of the at least one AR object and the ratio of the display area are greater than or equal to the predetermined first threshold, in operation 807, the processor may determine to display the at least one AR object as an outline by using the display. For example, based on that the count of the at least one AR object to be displayed by using the display is greater than or equal to the predetermined threshold count, or the ratio of the display area of the at least one AR object is greater than or equal to the predetermined threshold ratio, or the count of the at least one AR object and the ratio of the display area are respectively greater than or equal to the predetermined threshold count and the predetermined threshold ratio, the processor may determine to display the at least one AR object as the outline.

In operation 809, based on that the at least one AR object is determined to be displayed as the outline, the processor may determine at least one first representative pixel value for each of the at least one AR object. For example, the processor may determine the first representative pixel value for each of at least one section divided respectively for the at least one AR object.

In operation 811, the processor may determine a second representative pixel value for an image acquired by using at least one camera. For example, when at least one AR object and the image are displayed by using the display, the processor may determine the second representative pixel value for each of at least one first region on the image corresponding to a display position of each of the at least one AR object.

In operation 813, in order to display each of the at least one AR object as the outline, the processor may compare at least one first representative pixel value for an AR object and a second representative pixel value for the first region on an image corresponding to a display position of the AR object, and may determine whether a difference of the values is included within a predetermined threshold range.

In an embodiment, based on that a difference between at least one first representative pixel value for an AR object and the second representative pixel value for the first region is not included in the predetermined threshold range, in operation 815, the processor may display at least one outline defining at least one section related to the at least one first representative pixel value of the AR object with a first display attribute which uses a color corresponding to the first representative pixel value, by using the display.

In an embodiment, based on that a difference between at least one first representative pixel value for an AR object and the second representative pixel value for the first region is included in the predetermined threshold range, in operation 817, the processor may display at least one outline defining at least one section related to the at least one first representative pixel value of the AR object with a second display attribute different from the first display attribute. For example, the processor may display at least one outline defining the at least one section with the second display attribute which uses a color having a complementary color relationship with the first representative pixel value determined for the section. In addition, for example, the processor may display at least one outline defining the at least one section with the second display attribute which uses a thicker thickness than another outline displayed with the first display attribute. In addition, for example, the processor may display at least one outline defining the at least one section with the second display attribute which uses a higher brightness or saturation than another outline displayed with the first display attribute.

An electronic device according to an embodiment of the disclosure may include at least one camera, a display, and at least one processor electrically coupled to the at least one camera and the display.

According to an embodiment of the disclosure, the at least one processor may be configured to acquire an image by using the at least one camera, based on that the image is acquired, identify at least one of a count of an Augmented Reality (AR) object to be displayed by using the display and a ratio of a display area of the AR object to a resolution of the display, and based on that the at least one of the count of AR object and the ratio of the display area of the AR object are greater than or equal to a predetermined first threshold, determine to display the AR object as an outline by using the display.

According to an embodiment of the disclosure, the at least one processor may be configured to, based on that the AR object is determined to be displayed as the outline, determine at least one first representative pixel value for the AR object, determine a second representative pixel value for presenting a first region of the image corresponding to a display position of the AR object by using the display, based on that a difference between the at least one first representative pixel value and the second representative pixel value is not included in a predetermined threshold range, display the AR object as the outline in accordance with a first display attribute which uses the at least one first representative pixel value by using the display, and based on that the difference between the at least one first representative pixel value and the second representative pixel value is included in the predetermined threshold range, display the AR object as the outline in accordance with a second display attribute different from the first display attribute by using the display.

According to an embodiment of the disclosure, the at least one processor may be configured to divide the AR object into at least one section which is defined depending on the outline, and determine the first representative pixel value for each of the at least one section.

According to an embodiment of the disclosure, the at least one processor may be configured to, based on a representative value or average value of RGB values of the display for presenting each of the at least one section by using the display, determine the first representative pixel value for each of the at least one section, and based on a YCbCr value obtained converted from the representative value or average value of the RGB values, determine the first representative pixel value for each of the at least one section.

According to an embodiment of the disclosure, the at least one processor may be configured to, based on a representative value or average value of RGB values of the display for presenting the first region of the image by using the display, determine the second representative pixel value for the first region of the image, or based on a YCbCr value converted from the representative value or average value of the RGB values, determine the second representative pixel value for the first region of the image.

According to an embodiment of the disclosure, the at least one section may include a first section and a second section.

According to an embodiment of the disclosure, the at least one processor may be configured to determine whether a difference between the first representative pixel value determined for the first section and the second representative pixel value for the first region of the image is included in the predetermined threshold range, and determine whether the difference between the first representative pixel value determined for the second section and the second representative pixel value for the first region of the image is included in the predetermined threshold range.

According to an embodiment of the disclosure, the at least one processor may be configured to, based on that the difference between the first representative pixel value determined for the first section and the second representative pixel value for the first region of the image is not included in the predetermined threshold range, display a first outline defining the first section in accordance with the first display attribute, and based on that the first representative pixel value determined for the second section and the second representative pixel value for the first region of the image is included in the predetermined threshold range, display a second outline defining the second section in accordance with the second display attribute.

According to an embodiment of the disclosure, the at least one processor may be configured to display the second outline defining the second section in accordance with the second display attribute which uses a color having a complementary color relationship with the first representative pixel value determined for the second section.

According to an embodiment of the disclosure, the at least one processor may be configured to display the second outline defining the second section in accordance with the second display attribute which uses a thicker thickness than the first outline displayed in accordance with the first display attribute.

According to an embodiment of the disclosure, the at least one processor may be configured to display the second outline defining the second section in accordance with the second display attribute which uses a higher brightness or higher saturation than the first outline displayed in accordance with the first display attribute.

According to an embodiment of the disclosure, the at least one processor may be configured to determine whether the at least one of the count of the AR object and the ratio of the display area of the AR object are greater than or equal to a predetermined second threshold greater than the predetermined first threshold, based on that the at least one of the count of the AR object and the ratio of the display area of the AR object are greater than or equal to the predetermined second threshold, determine a third representative pixel value for the entire region of the image, and display the AR object as the outline in accordance with a third display attribute which uses a color having a complementary relationship with the third representative pixel value.

A method of displaying an AR object of an electronic device according to an embodiment of the disclosure may include, by at least one processor of the electronic device, acquiring an image by using at least one camera of the electronic device, based on that the image is acquired, identifying at least one of a count of the AR object to be displayed by using the display of the electronic device,and a ratio of a display area of the AR object to a resolution of the display, and based on that the at least one of the count of AR object and the ratio of the display area of the AR object are greater than or equal to a predetermined first threshold, determining to display the AR object as an outline by using the display.

According to an embodiment of the disclosure, the determining to display the AR object as the outline may include, by the at least one processor, based on that the AR object is determined to be displayed as the outline, determining at least one first representative pixel value for the AR object, determining a second representative pixel value for presenting a first region of the image corresponding to a display position of the AR object by using the display, based on that a difference between the at least one first representative pixel value and the second representative pixel value is not included in a predetermined threshold range, displaying the AR object as the outline in accordance with a first display attribute which uses the at least one first representative pixel value by using the display, and based on that the difference between the at least one first representative pixel value and the second representative pixel value is included in the predetermined threshold range, displaying the AR object as the outline in accordance with a second display attribute different from the first display attribute by using the display.

According to an embodiment of the disclosure, the determining of the at least one first representative pixel value for the AR object may include, by the at least one processor, dividing the AR object into at least one section which is defined depending on the outline, and determining the first representative pixel value for each of the at least one section.

According to an embodiment of the disclosure, the determining of the first representative pixel value for each of the at least one section may include, by the at least one processor, based on a representative value or average value of RGB values of the display for presenting each of the at least one section by using the display, determining the first representative pixel value for each of the at least one section, and based on a YCbCr value obtained converted from the representative value or average value of the RGB values, determining the first representative pixel value for each of the at least one section.

According to an embodiment of the disclosure, the determining of the second representative pixel value for the first region of the image may include, by the at least one processor, based on a representative value or average value of RGB values of the display for presenting the first region of the image by using the display, determining the second representative pixel value for the first region of the image, or based on a YCbCr value converted from the representative value or average value of the RGB values, determining the second representative pixel value for the first region of the image.

According to an embodiment of the disclosure, the at least one section may include a first section and a second section.

According to an embodiment of the disclosure, the determining of the first representative pixel value for each of the at least one section may include, by the at least one processor, determining whether a difference between the first representative pixel value determined for the first section and the second representative pixel value for the first region of the image is included in the predetermined threshold range, and determine whether the difference between the first representative pixel value determined for the second section and the second representative pixel value for the first region of the image is included in the predetermined threshold range.

According to an embodiment of the disclosure, the determining of the first representative pixel value for each of the at least one section may include, by the at least one processor, based on that the difference between the first representative pixel value determined for the first section and the second representative pixel value for the first region of the image is not included in the predetermined threshold range, displaying a first outline defining the first section in accordance with the first display attribute, and based on that the first representative pixel value determined for the second section and the second representative pixel value for the first region of the image is included in the predetermined threshold range, displaying a second outline defining the second section in accordance with the second display attribute.

According to an embodiment of the disclosure, the displaying of the second outline defining the second section in accordance with the second display attribute may include, by the at least one processor, displaying the second outline defining the second section in accordance with the second display attribute which uses a color having a complementary color relationship with the first representative pixel value determined for the second section,

According to an embodiment of the disclosure, the displaying of the second outline which defines the second section in accordance with the second display attribute may include, by the at least one processor, displaying the second outline defining the second section in accordance with the second display attribute which uses a thicker thickness than the first outline displayed in accordance with the first display attribute.

According to an embodiment of the disclosure, the displaying of the second outline which defines the second section in accordance with the second display attribute may include, by the at least one processor, displaying the second outline defining the second section in accordance with the second display attribute which uses a higher brightness or higher saturation than the first outline displayed in accordance with the first display attribute.

According to an embodiment of the disclosure, the method may further include, by the at least one processor, determining whether the at least one of the count of the AR object and the ratio of the display area of the AR object are greater than or equal to a predetermined second threshold greater than the predetermined first threshold, based on that the at least one of the count of the AR object and the ratio of the display area of the AR object are greater than or equal to the predetermined second threshold, determining a third representative pixel value for the entire region of the image, and displaying the AR object as the outline in accordance with a third display attribute which uses a color having a complementary relationship with the third representative pixel value.

According to various embodiments of the disclosure, a display platform capable of improving visibility for an AR object and visibility for a scene of a real world overlaid with the AR object or an image of the real world may be provided.

In addition, according to various embodiments of the disclosure, a display platform capable of improving user experience for an AR environment may be provided.

Fig. 9 is a block diagram illustrating an electronic device 901 in a network environment 900 according to various embodiments.

Referring to Fig. 9, the electronic device 901 in the network environment 900 may communicate with an electronic device 902 via a first network 998 (e.g., a short-range wireless communication network), or at least one of an electronic device 904 or a server 908 via a second network 999 (e.g., a long-range wireless communication network). According to an embodiment, the electronic device 901 may communicate with the electronic device 904 via the server 908. According to an embodiment, the electronic device 901 may include a processor 920, memory 930, an input module 950, a sound output module 955, a display module 960, an audio module 970, a sensor module 976, an interface 977, a connecting terminal 978, a haptic module 979, a camera module 980, a power management module 988, a battery 989, a communication module 990, a subscriber identification module(SIM) 996, or an antenna module 997. In some embodiments, at least one of the components (e.g., the connecting terminal 978) may be omitted from the electronic device 901, or one or more other components may be added in the electronic device 901. In some embodiments, some of the components (e.g., the sensor module 976, the camera module 980, or the antenna module 997) may be implemented as a single component (e.g., the display module 960).

The processor 920 may execute, for example, software (e.g., a program 940) to control at least one other component (e.g., a hardware or software component) of the electronic device 901 coupled with the processor 920, and may perform various data processing or computation. According to one embodiment, as at least part of the data processing or computation, the processor 920 may store a command or data received from another component (e.g., the sensor module 976 or the communication module 990) in volatile memory 932, process the command or the data stored in the volatile memory 932, and store resulting data in non-volatile memory 934. According to an embodiment, the processor 920 may include a main processor 921 (e.g., a central processing unit (CPU) or an application processor (AP)), or an auxiliary processor 923 (e.g., a graphics processing unit (GPU), a neural processing unit (NPU), an image signal processor (ISP), a sensor hub processor, or a communication processor (CP)) that is operable independently from, or in conjunction with, the main processor 921. For example, when the electronic device 901 includes the main processor 921 and the auxiliary processor 923, the auxiliary processor 923 may be adapted to consume less power than the main processor 921, or to be specific to a specified function. The auxiliary processor 923 may be implemented as separate from, or as part of the main processor 921.

The auxiliary processor 923 may control at least some of functions or states related to at least one component (e.g., the display module 960, the sensor module 976, or the communication module 990) among the components of the electronic device 901, instead of the main processor 921 while the main processor 921 is in an inactive (e.g., sleep) state, or together with the main processor 921 while the main processor 921 is in an active state (e.g., executing an application). According to an embodiment, the auxiliary processor 923 (e.g., an image signal processor or a communication processor) may be implemented as part of another component (e.g., the camera module 980 or the communication module 990) functionally related to the auxiliary processor 923. According to an embodiment, the auxiliary processor 923 (e.g., the neural processing unit) may include a hardware structure specified for artificial intelligence model processing. An artificial intelligence model may be generated by machine learning. Such learning may be performed, e.g., by the electronic device 901 where the artificial intelligence is performed or via a separate server (e.g., the server 908). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 930 may store various data used by at least one component (e.g., the processor 920 or the sensor module 976) of the electronic device 901. The various data may include, for example, software (e.g., the program 940) and input data or output data for a command related thererto. The memory 930 may include the volatile memory 932 or the non-volatile memory 934.

The program 940 may be stored in the memory 930 as software, and may include, for example, an operating system (OS) 942, middleware 944, or an application 946.

The input module 950 may receive a command or data to be used by another component (e.g., the processor 920) of the electronic device 901, from the outside (e.g., a user) of the electronic device 901. The input module 950 may include, for example, a microphone, a mouse, a keyboard, a key (e.g., a button), or a digital pen (e.g., a stylus pen).

The sound output module 955 may output sound signals to the outside of the electronic device 901. The sound output module 955 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 960 may visually provide information to the outside (e.g., a user) of the electronic device 901. The display module 960 may include, for example, a display, a hologram device, or a projector and control circuitry to control a corresponding one of the display, hologram device, and projector. According to an embodiment, the display module 960 may include a touch sensor adapted to detect a touch, or a pressure sensor adapted to measure the intensity of force incurred by the touch.

The audio module 970 may convert a sound into an electrical signal and vice versa. According to an embodiment, the audio module 970 may obtain the sound via the input module 950, or output the sound via the sound output module 955 or a headphone of an external electronic device (e.g., an electronic device 902) directly (e.g., wiredly) or wirelessly coupled with the electronic device 901.

The sensor module 976 may detect an operational state (e.g., power or temperature) of the electronic device 901 or an environmental state (e.g., a state of a user) external to the electronic device 901, and then generate an electrical signal or data value corresponding to the detected state. According to an embodiment, the sensor module 976 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 977 may support one or more specified protocols to be used for the electronic device 901 to be coupled with the external electronic device (e.g., the electronic device 902) directly (e.g., wiredly) or wirelessly. According to an embodiment, the interface 977 may include, for example, a high definition multimedia interface (HDMI), a universal serial bus (USB) interface, a secure digital (SD) card interface, or an audio interface.

A connecting terminal 978 may include a connector via which the electronic device 901 may be physically connected with the external electronic device (e.g., the electronic device 902). According to an embodiment, the connecting terminal 978 may include, for example, a HDMI connector, a USB connector, a SD card connector, or an audio connector (e.g., a headphone connector).

The haptic module 979 may convert an electrical signal into a mechanical stimulus (e.g., a vibration or a movement) or electrical stimulus which may be recognized by a user via his tactile sensation or kinesthetic sensation. According to an embodiment, the haptic module 979 may include, for example, a motor, a piezoelectric element, or an electric stimulator.

The camera module 980 may capture a still image or moving images. According to an embodiment, the camera module 980 may include one or more lenses, image sensors, image signal processors, or flashes.

The power management module 988 may manage power supplied to the electronic device 901. According to one embodiment, the power management module 988 may be implemented as at least part of, for example, a power management integrated circuit (PMIC).

The battery 989 may supply power to at least one component of the electronic device 901. According to an embodiment, the battery 989 may include, for example, a primary cell which is not rechargeable, a secondary cell which is rechargeable, or a fuel cell.

The communication module 990 may support establishing a direct (e.g., wired) communication channel or a wireless communication channel between the electronic device 901 and the external electronic device (e.g., the electronic device 902, the electronic device 904, or the server 908) and performing communication via the established communication channel. The communication module 990 may include one or more communication processors that are operable independently from the processor 920 (e.g., the application processor (AP)) and supports a direct (e.g., wired) communication or a wireless communication. According to an embodiment, the communication module 990 may include a wireless communication module 992 (e.g., a cellular communication module, a short-range wireless communication module, or a global navigation satellite system (GNSS) communication module) or a wired communication module 994 (e.g., a local area network (LAN) communication module or a power line communication (PLC) module). A corresponding one of these communication modules may communicate with the external electronic device via the first network 998 (e.g., a short-range communication network, such as Bluetooth^{™}, wireless-fidelity (Wi-Fi) direct, or infrared data association (IrDA)) or the second network 999 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 992 may identify and authenticate the electronic device 901 in a communication network, such as the first network 998 or the second network 999, using subscriber information (e.g., international mobile subscriber identity (IMSI)) stored in the subscriber identification module 996.

The wireless communication module 992 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 992 may support a high-frequency band (e.g., the mmWave band) to achieve, e.g., a high data transmission rate. The wireless communication module 992 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 992 may support various requirements specified in the electronic device 901, an external electronic device (e.g., the electronic device 904), or a network system (e.g., the second network 999). According to an embodiment, the wireless communication module 992 may support a peak data rate (e.g., 20Gbps or more) for implementing eMBB, loss coverage (e.g., 964dB or less) for implementing mMTC, or U-plane latency (e.g., 0.5ms or less for each of downlink (DL) and uplink (UL), or a round trip of 9ms or less) for implementing URLLC.

The antenna module 997 may transmit or receive a signal or power to or from the outside (e.g., the external electronic device) of the electronic device 901. According to an embodiment, the antenna module 997 may include an antenna including a radiating element composed of a conductive material or a conductive pattern formed in or on a substrate (e.g., a printed circuit board (PCB)). According to an embodiment, the antenna module 997 may include a plurality of antennas (e.g., array antennas). In such a case, at least one antenna appropriate for a communication scheme used in the communication network, such as the first network 998 or the second network 999, may be selected, for example, by the communication module 990 (e.g., the wireless communication module 992) from the plurality of antennas. The signal or the power may then be transmitted or received between the communication module 990 and the external electronic device via the selected at least one antenna. According to an embodiment, another component (e.g., a radio frequency integrated circuit (RFIC)) other than the radiating element may be additionally formed as part of the antenna module 997.

According to various embodiments, the antenna module 997 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 901 and the external electronic device 904 via the server 908 coupled with the second network 999. Each of the electronic devices 902 or 904 may be a device of a same type as, or a different type, from the electronic device 901. According to an embodiment, all or some of operations to be executed at the electronic device 901 may be executed at one or more of the external electronic devices 902, 904, or 908. For example, if the electronic device 901 should perform a function or a service automatically, or in response to a request from a user or another device, the electronic device 901, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 901. The electronic device 901 may provide the outcome, with or without further processing of the outcome, as at least part of a reply to the request. To that end, a cloud computing, distributed computing, mobile edge computing (MEC), or client-server computing technology may be used, for example. The electronic device 901 may provide ultra low-latency services using, e.g., distributed computing or mobile edge computing. In another embodiment, the external electronic device 904 may include an internet-of-things (IoT) device. The server 908 may be an intelligent server using machine learning and/or a neural network. According to an embodiment, the external electronic device 904 or the server 908 may be included in the second network 999. The electronic device 901 may be applied to intelligent services (e.g., smart home, smart city, smart car, or healthcare) based on 5G communication technology or IoT-related technology.

The electronic device according to various embodiments of the disclosure may be one of various types of devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic", "logic block", "part", or "circuitry". A module may be a single integral component, or a minimum unit or part thereof, adapted to perform one or more functions. For example, according to an embodiment, the module may be implemented in a form of an Application-Specific Integrated Circuit (ASIC).

Various embodiments as set forth herein may be implemented as software (e.g., the program 940) including one or more instructions that are stored in a storage medium (e.g., the internal memory 936 or the external memory 938) that is readable by a machine (e.g., the electronic device 901). For example, a processor (e.g., the processor 920) of the machine (e.g., the electronic device 901) may invoke at least one of the one or more instructions stored in the storage medium, and execute it. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Herein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., Compact Disc Read Only Memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. According to various embodiments, one or more of the above-described components may be omitted, or one or more other components may be added. Alternatively or additionally, a plurality of components (e.g., modules or programs) may be integrated as a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101a, 101b, 101c, 101, 901, 103, 902, 904) comprising:
at least one camera (105, 133, 231);
a display (103, 210); and
at least one processor (921, 923, 920, 902) electrically coupled to the at least one camera and the display,
wherein the at least one processor is configured to:
acquire an image (300) by using the at least one camera;
based on that the image is acquired, identify at least one of a count of an Augmented Reality (AR) object (2, 410, 430, 420) to be displayed by using the display, and a ratio of a display area of the AR object to a resolution of the display;
based on that the at least one of the count of AR object and the ratio of the display area of the AR object are greater than or equal to a predetermined first threshold, determine to display the AR object as an outline (413a, 411a, 433a, 431a) by using the display;
**characterized in that** the at least one processor is further configure to:
based on that the AR object is determined to be displayed as the outline, determine at least one first representative pixel value for the AR object;
determine a second representative pixel value for presenting a first region (510, 530) of the image corresponding to a display position of the AR object by using the display;
based on that a difference between the at least one first representative pixel value and the second representative pixel value is not included in a predetermined threshold range, display the AR object as the outline in accordance with a first display attribute which uses the at least one first representative pixel value by using the display; and
based on that the difference between the at least one first representative pixel value and the second representative pixel value is included in the predetermined threshold range, display the AR object as the outline in accordance with a second display attribute different from the first display attribute by using the display.

2. The electronic device of claim 1, wherein the at least one processor is configured to:
divide the AR object into at least one section which is defined depending on the outline; and
determine the first representative pixel value for each of the at least one section.

3. The electronic device of claim 2, wherein the at least one processor is configured to:
based on a representative value or average value of RGB values of the display for presenting each of the at least one section by using the display, determine the first representative pixel value for each of the at least one section; and
based on a YCbCr value obtained converted from the representative value or average value of the RGB values, determine the first representative pixel value for each of the at least one section.

4. The electronic device of claim 1, wherein the at least one processor is configured to:
based on a representative value or average value of RGB values of the display for presenting the first region of the image by using the display, determine the second representative pixel value for the first region of the image; or
based on a YCbCr value converted from the representative value or average value of the RGB values, determine the second representative pixel value for the first region of the image.

5. The electronic device of claim 2,
wherein the at least one section includes a first section and a second section, and
wherein the at least one processor is configured to:
determine whether a difference between the first representative pixel value determined for the first section and the second representative pixel value for the first region of the image is included in the predetermined threshold range; and
determine whether the difference between the first representative pixel value determined for the second section and the second representative pixel value for the first region of the image is included in the predetermined threshold range.

6. The electronic device of claim 5, wherein the at least one processor is configured to:
based on that the difference between the first representative pixel value determined for the first section and the second representative pixel value for the first region of the image is not included in the predetermined threshold range, display a first outline defining the first section in accordance with the first display attribute; and
based on that the first representative pixel value determined for the second section and the second representative pixel value for the first region of the image is included in the predetermined threshold range, display a second outline defining the second section in accordance with the second display attribute.

7. The electronic device of claim 6, wherein the at least one processor is configured to:
display the second outline defining the second section in accordance with the second display attribute which uses a color having a complementary color relationship with the first representative pixel value determined for the second section;
display the second outline defining the second section in accordance with the second display attribute which uses a thicker thickness than the first outline displayed in accordance with the first display attribute; or
display the second outline defining the second section in accordance with the second display attribute which uses a higher brightness or higher saturation than the first outline displayed in accordance with the first display attribute.

8. The electronic device of claim 1, wherein the at least one processor is configured to:
determine whether the at least one of the count of the AR object and the ratio of the display area of the AR object are greater than or equal to a predetermined second threshold greater than the predetermined first threshold;
based on that the at least one of the count of the AR object and the ratio of the display area of the AR object are greater than or equal to the predetermined second threshold, determine a third representative pixel value for the entire region of the image; and
display the AR object as the outline in accordance with a third display attribute which uses a color having a complementary relationship with the third representative pixel value.

9. A method of displaying an AR object (2, 410, 430, 420) of an electronic device (101a, 101b, 101c, 101, 901, 103, 902, 904), the method comprising:
acquiring, by at least one processor (921, 923, 920, 902) of the electronic device, an image (300) by using at least one camera (105, 133, 231) of the electronic device;
based on that the image is acquired, identifying, by the at least one processor, at least one of a count of the AR object to be displayed by using the display of the electronic device and a ratio of a display area (230, 510, 530) of the AR object to a resolution of the display;
based on that the at least one of the count of AR object and the ratio of the display area of the AR object are greater than or equal to a predetermined first threshold, determining, by the at least one processor, to display the AR object as an outline by using the display;
the method being **characterized by** further comprising:
based on that the AR object is determined to be displayed as the outline, determining, by the at least one processor, at least one first representative pixel value for the AR object;
determining, by the at least one processor, a second representative pixel value for presenting a first region of the image corresponding to a display position of the AR object by using the display;
based on that a difference between the at least one first representative pixel value and the second representative pixel value is not included in a predetermined threshold range, displaying, by the at least one processor, the AR object as the outline in accordance with a first display attribute which uses the at least one first representative pixel value by using the display; and
based on that the difference between the at least one first representative pixel value and the second representative pixel value is included in the predetermined threshold range, displaying, by the at least one processor, the AR object as the outline in accordance with a second display attribute different from the first display attribute by using the display.

10. The method of claim 9, wherein the determining of the at least one first representative pixel value for the AR object comprises:
dividing, by the at least one processor, the AR object into at least one section which is defined depending on the outline; and
determining, by the at least one processor, the first representative pixel value for each of the at least one section.

11. The method of claim 10, wherein the determining of the first representative pixel value for each of the at least one section comprises:
based on a representative value or average value of RGB values of the display for presenting each of the at least one section by using the display, determining, by the at least one processor; the first representative pixel value for each of the at least one section; and
based on a YCbCr value obtained converted from the representative value or average value of the RGB values, determining, by the at least one processor, the first representative pixel value for each of the at least one section.

12. The method of claim 9, wherein the determining of the second representative pixel value for the first region of the image comprises:
based on a representative value or average value of RGB values of the display for presenting the first region of the image by using the display, determining, by the at least one processor, the second representative pixel value for the first region of the image; or
based on a YCbCr value converted from the representative value or average value of the RGB values, determining, by the at least one processor, the second representative pixel value for the first region of the image.

13. The method of claim 10,
wherein the at least one section includes a first section and a second section, and
wherein the determining of the first representative pixel value for each of the at least one section comprises:
based on that the difference between the first representative pixel value determined for the first section and the second representative pixel value for the first region of the image is not included in the predetermined threshold range, displaying, by the at least one processor, a first outline defining the first section in accordance with the first display attribute; and
based on that the first representative pixel value determined for the second section and the second representative pixel value for the first region of the image is included in the predetermined threshold range, displaying, by the at least one processor, a second outline defining the second section in accordance with the second display attribute.

14. The method of claim 13, wherein the displaying of the second outline defining the second section in accordance with the second display attribute comprises:
displaying, by the at least one processor, the second outline defining the second section in accordance with the second display attribute which uses a color having a complementary color relationship with the first representative pixel value determined for the second section;
displaying, by the at least one processor, the second outline defining the second section in accordance with the second display attribute which uses a thicker thickness than the first outline displayed in accordance with the first display attribute; or
displaying, by the at least one processor, the second outline defining the second section in accordance with the second display attribute which uses a higher brightness or higher saturation than the first outline displayed in accordance with the first display attribute.

15. The method of claim 9, further comprising:
determining, by the at least one processor, whether the at least one of the count of the AR object and the ratio of the display area of the AR object are greater than or equal to a predetermined second threshold greater than the predetermined first threshold;
based on that the at least one of the count of the AR object and the ratio of the display area of the AR object are greater than or equal to the predetermined second threshold, determining, by the at least one processor, a third representative pixel value for the entire region of the image; and
displaying, by the at least one processor, the AR object as the outline in accordance with a third display attribute which uses a color having a complementary relationship with the third representative pixel value.

## Patentansprüche

1. Elektronische Vorrichtung (101a, 101b, 101c, 101, 901, 103, 902, 904), umfassend:
mindestens eine Kamera (105, 133, 231);
eine Anzeige (103, 210); und
mindestens einen Prozessor (921, 923, 920, 902), der elektrisch mit der mindestens einen Kamera und der Anzeige gekoppelt ist,
wobei der mindestens eine Prozessor konfiguriert ist zum:
Erfassen eines Bildes (300) unter Verwendung der mindestens einen Kamera,
basierend darauf, dass das Bild erfasst wird, Identifizieren von mindesten einem einer Anzahl eines Augmented Reality-(AR)-Objekts (2, 410, 430, 420), das unter Verwendung der Anzeige angezeigt werden soll, und eines Verhältnisses zwischen einer Anzeigefläche des AR-Objekts und einer Auflösung der Anzeige;
basierend darauf, dass das mindestens eine der Anzahl des AR-Objekts und des Verhältnisses der Anzeigefläche des AR-Objekts größer oder gleich einem vorbestimmten ersten Schwellenwert ist, Bestimmen, dass das AR-Objekt als Umriss (413a, 411a, 433a, 431a) unter Verwendung der Anzeige angezeigt wird;
**dadurch gekennzeichnet, dass** der mindestens eine Prozessor ferner konfiguriert ist zum:
basierend darauf, dass das AR-Objekt zum Anzeigen als Umriss bestimmt wird, Bestimmen mindestens eines ersten repräsentativen Pixelwerts für das AR-Objekt;
Bestimmen eines zweiten repräsentativen Pixelwerts zum Darstellen eines ersten Bereichs (510, 530) des Bildes entsprechend einer Anzeigeposition des AR-Objekts unter Verwendung der Anzeige;
basierend darauf, dass eine Differenz zwischen dem mindestens einen ersten repräsentativen Pixelwert und dem zweiten repräsentativen Pixelwert nicht in einem vorbestimmten Schwellenwertbereich umfasst ist, Anzeigen des AR-Objekts als Umriss in Übereinstimmung mit einem ersten Anzeigeattribut, das den mindestens einen ersten repräsentativen Pixelwert verwendet, unter Verwendung der Anzeige; und
zumindest basierend darauf, dass die Differenz zwischen dem mindestens einen ersten repräsentativen Pixelwert und dem zweiten repräsentativen Pixelwert im vorbestimmten Schwellenwertbereich enthalten ist, Anzeigen des AR-Objekts als Umriss in Übereinstimmung mit einem zweiten Anzeigeattribut, das sich von dem ersten Anzeigeattribut unterscheidet, unter Verwendung der Anzeige.

2. Elektronische Vorrichtung nach Anspruch 1, wobei der mindestens eine Prozessor konfiguriert ist zum:
Unterteilen des AR-Objekts in mindestens einen Abschnitt, der in Abhängigkeit vom Umriss definiert ist; und
Bestimmen des ersten repräsentativen Pixelwerts für jeden des mindestens einen Abschnitts.

3. Elektronische Vorrichtung nach Anspruch 2, wobei der mindestens eine Prozessor konfiguriert ist zum:
basierend auf einem repräsentativen Wert oder Durchschnittswert von RGB-Werten der Anzeige zum Darstellen jedes des mindestens einen Abschnitts unter Verwendung der Anzeige, Bestimmen des ersten repräsentativen Pixelwerts für jeden des mindestens einen Abschnitts; und
basierend auf einem YCbCr-Wert, der aus dem repräsentativen Wert oder Durchschnittswert der RGB-Werte gewandelt erhalten wurde, Bestimmen des ersten repräsentativen Pixelwert für jeden des mindestens einen Abschnitts.

4. Elektronische Vorrichtung nach Anspruch 1, wobei der mindestens eine Prozessor konfiguriert ist zum:
basierend auf einem repräsentativen Wert oder Durchschnittswert von RGB-Werten der Anzeige zum Darstellen des ersten Bereichs des Bildes unter Verwendung der Anzeige, Bestimmen des zweiten repräsentativen Pixelwerts für den ersten Bereich des Bildes; oder
basierend auf einem YCbCr-Wert, der aus dem repräsentativen Wert oder dem Durchschnittswert der RGB-Werte gewandelt wurde, Bestimmen des zweiten repräsentativen Pixelwerts für den ersten Bereich des Bildes.

5. Elektronische Vorrichtung nach Anspruch 2,
wobei der mindestens eine Abschnitt einen ersten Abschnitt und einen zweiten Abschnitt umfasst, und
wobei der mindestens eine Prozessor konfiguriert ist zum:
Bestimmen, ob eine Differenz zwischen dem ersten repräsentativen Pixelwert, der für den ersten Abschnitt bestimmt wurde, und dem zweiten repräsentativen Pixelwert für den ersten Bereich des Bildes im vorgegebenen Schwellenwertbereich enthalten ist; und
Bestimmen, ob die Differenz zwischen dem für den zweiten Abschnitt ermittelten ersten repräsentativen Pixelwert und dem zweiten repräsentativen Pixelwert für den ersten Bereich des Bildes im vorgegebenen Schwellenwertbereich enthalten ist.

6. Elektronische Vorrichtung nach Anspruch 5, wobei der mindestens eine Prozessor konfiguriert ist zum:
basierend darauf, dass die Differenz zwischen dem ersten repräsentativen Pixelwert, der für den ersten Ausschnitt bestimmt wurde, und dem zweiten repräsentativen Pixelwert für den ersten Bereich des Bildes nicht im vorbestimmten Schwellenwertbereich enthalten ist, Anzeigen eines ersten Umrisses, der den ersten Abschnitt in Übereinstimmung mit dem ersten Anzeigeattribut definiert; und
basierend darauf, dass der erste repräsentative Pixelwert, der für den zweiten Abschnitt bestimmt wurde, und der zweite repräsentative Pixelwert für den ersten Bereich des Bildes in dem vorbestimmten Schwellenwertbereich enthalten sind, Anzeigen eines zweiten Umrisses, der den zweiten Abschnitt in Übereinstimmung mit dem zweiten Anzeigeattribut definiert.

7. Elektronische Vorrichtung nach Anspruch 6, wobei der mindestens eine Prozessor konfiguriert ist zum:
Anzeigen des zweiten Umrisses, der den zweiten Abschnitt definiert, in Übereinstimmung mit dem zweiten Anzeigeattribut, das eine Farbe verwendet, die eine komplementäre Farbbeziehung zu dem für den zweiten Abschnitt bestimmten ersten repräsentativen Pixelwert hat;
Anzeigen des zweiten Umrisses, der den zweiten Abschnitt definiert, in Übereinstimmung mit dem zweiten Anzeigeattribut, das eine dickere Dicke als der erste Umriss verwendet, der in Übereinstimmung mit dem ersten Anzeigeattribut angezeigt wird; oder
Anzeigen des zweiten Umrisses, der den zweiten Abschnitt definiert, in Übereinstimmung mit dem zweiten Anzeigeattribut, das eine höhere Helligkeit oder eine höhere Sättigung verwendet als der erste Umriss, der in Übereinstimmung mit dem ersten Anzeigeattribut angezeigt wird.

8. Elektronische Vorrichtung nach Anspruch 1, wobei der mindestens eine Prozessor konfiguriert ist zum:
Bestimmen, ob das mindestens eine der Anzahl des AR-Objekts und des Verhältnisses der Anzeigefläche des AR-Objekts größer oder gleich einem vorbestimmten zweiten Schwellenwert ist, der größer als der vorbestimmte erste Schwellenwert ist;
basierend darauf, dass das mindestens eine der Anzahl des AR-Objekts und des Verhältnisses der Anzeigefläche des AR-Objekts größer oder gleich dem vorbestimmten zweiten Schwellenwert ist, Bestimmen eines dritten repräsentativen Pixelwerts für den gesamten Bereich des Bildes; und
Anzeigen des AR-Objekts als Umriss in Übereinstimmung mit einem dritten Anzeigeattribut, das eine Farbe verwendet, die eine komplementäre Beziehung zu dem dritten repräsentativen Pixelwert hat.

9. Verfahren zum Anzeigen eines AR-Objekts (2, 410, 430, 420) einer elektronischen Vorrichtung (101a, 101b, 101c, 101, 901, 103, 902, 904), wobei das Verfahren umfasst:
Erfassen eines Bildes (300) durch mindestens einen Prozessor (921, 923, 920, 902) der elektronischen Vorrichtung unter Verwendung mindestens einer Kamera (105, 133, 231) der elektronischen Vorrichtung;
basierend darauf, dass das Bild erfasst wird, Identifizieren, durch den mindestens einen Prozessor von mindestens einem einer Anzahl des AR-Objekts, das unter Verwendung der Anzeige der elektronischen Vorrichtung angezeigt werden soll, und eines Verhältnisses einer Anzeigefläche (230, 510, 530) des AR-Objekts zu einer Auflösung der Anzeige;
basierend darauf, dass das mindestens eine der Anzahl des AR-Objekts und des Verhältnisses der Anzeigefläche des AR-Objekts größer oder gleich einem vorbestimmten ersten Schwellenwert ist, Bestimmen, durch den mindestens einen Prozessor, dass das AR-Objekt als Umriss unter Verwendung der Anzeige angezeigt wird;
wobei das Verfahren **dadurch gekennzeichnet ist, dass** es ferner umfasst:
basierend darauf, dass das AR-Objekt zum Anzeigen als Umriss bestimmt wird, Bestimmen, durch den mindestens einen Prozessor, mindestens eines ersten repräsentativen Pixelwerts für das AR-Objekt;
Bestimmen, durch den mindestens einen Prozessor, eines zweiten repräsentativen Pixelwerts zum Darstellen eines ersten Bereichs des Bildes, der einer Anzeigeposition des AR-Objekts entspricht, unter Verwendung der Anzeige;
basierend darauf, dass eine Differenz zwischen dem mindestens einen ersten repräsentativen Pixelwert und dem zweiten repräsentativen Pixelwert nicht in einem vorbestimmten Schwellenwertbereich umfasst ist, Anzeigen, durch den mindestens einen Prozessor, des AR-Objekts als Umriss in Übereinstimmung mit einem ersten Anzeigeattribut, das den mindestens einen ersten repräsentativen Pixelwert verwendet, unter Verwendung der Anzeige; und
basierend darauf, dass die Differenz zwischen dem mindestens einen ersten repräsentativen Pixelwert und dem zweiten repräsentativen Pixelwert im vorbestimmten Schwellenwertbereich enthalten ist, Anzeigen, durch den mindestens einen Prozessor, des AR-Objekts als Umriss in Übereinstimmung mit einem zweiten Anzeigeattribut, das sich von dem ersten Anzeigeattribut unterscheidet, unter Verwendung der Anzeige.

10. Verfahren nach Anspruch 9, wobei das Bestimmen des mindestens einen ersten repräsentativen Pixelwerts für das AR-Objekt umfasst:
Aufteilen des AR-Objekts durch den mindestens einen Prozessor in mindestens einen Abschnitt, der in Abhängigkeit vom Umriss definiert ist; und
Bestimmen des ersten repräsentativen Pixelwerts für jeden des mindestens einen Abschnitts durch den mindestens einen Prozessor.

11. Verfahren nach Anspruch 10, wobei das Bestimmen des ersten repräsentativen Pixelwerts für jeden des mindestens einen Abschnitts umfasst:
basierend auf einem repräsentativen Wert oder Durchschnittswert von RGB-Werten der Anzeige zum Darstellen jedes des mindestens einen Abschnitts unter Verwendung der Anzeige, Bestimmen, durch den mindestens einen Prozessor, des ersten repräsentativen Pixelwerts für jeden des mindestens einen Abschnitts; und
basierend auf einem YCbCr-Wert, der aus dem repräsentativen Wert oder dem Durchschnittswert der RGB-Werte gewandelt erhalten wurde, Bestimmen, durch den mindestens einen Prozessor, des ersten repräsentativen Pixelwerts für jeden des mindestens einen Abschnitts.

12. Verfahren nach Anspruch 9, wobei das Bestimmen des zweiten repräsentativen Pixelwerts für den ersten Bereich des Bildes umfasst:
basierend auf einem repräsentativen Wert oder Durchschnittswert von RGB-Werten der Anzeige zum Darstellen des ersten Bereichs des Bildes unter Verwendung der Anzeige, Bestimmen, durch den mindestens einen Prozessor, des zweiten repräsentativen Pixelwerts für den ersten Bereich des Bildes; oder
basierend auf einem YCbCr-Wert, der aus dem repräsentativen Wert oder dem Durchschnittswert der RGB-Werte gewandelt wurde, Bestimmen, durch den mindestens einen Prozessor, des zweiten repräsentativen Pixelwerts für den ersten Bereich des Bildes.

13. Verfahren nach Anspruch 10,
wobei der mindestens eine Abschnitt einen ersten Abschnitt und einen zweiten Abschnitt umfasst, und
wobei das Bestimmen des ersten repräsentativen Pixelwerts für jeden des mindestens einen Abschnitts umfasst:
basierend darauf, dass die Differenz zwischen dem ersten repräsentativen Pixelwert, der für den ersten Ausschnitt bestimmt wurde, und dem zweiten repräsentativen Pixelwert für den ersten Bereich des Bildes nicht im vorbestimmten Schwellenwertbereich enthalten ist, Anzeigen, durch den mindestens einen Prozessor, eines ersten Umrisses, der den ersten Abschnitt in Übereinstimmung mit dem ersten Anzeigeattribut definiert; und
basierend darauf, dass der erste repräsentative Pixelwert, der für den zweiten Abschnitt bestimmt wurde, und der zweite repräsentative Pixelwert für den ersten Bereich des Bildes in dem vorbestimmten Schwellenwertbereich enthalten sind, Anzeigen, durch den mindestens einen Prozessor, eines zweiten Umrisses, der den zweiten Abschnitt in Übereinstimmung mit dem zweiten Anzeigeattribut definiert.

14. Verfahren nach Anspruch 13, wobei das Anzeigen des zweiten Umrisses, der den zweiten Abschnitt definiert, in Übereinstimmung mit dem zweiten Anzeigeattribut umfasst:
Anzeigen, durch den mindestens einen Prozessor, des zweiten Umrisses, der den zweiten Abschnitt definiert, in Übereinstimmung mit dem zweiten Anzeigeattribut, das eine Farbe verwendet, die eine komplementäre Farbbeziehung zu dem für den zweiten Abschnitt bestimmten ersten repräsentativen Pixelwert hat;
Anzeigen, durch den mindestens einen Prozessor, des zweiten Umrisses, der den zweiten Abschnitt definiert, in Übereinstimmung mit dem zweiten Anzeigeattribut, das eine dickere Dicke als der erste Umriss verwendet, der in Übereinstimmung mit dem ersten Anzeigeattribut angezeigt wird; oder
Anzeigen, durch den mindestens einen Prozessor, des zweiten Umrisses, der den zweiten Abschnitt definiert, in Übereinstimmung mit dem zweiten Anzeigeattribut, das eine höhere Helligkeit oder eine höhere Sättigung verwendet als der erste Umriss, der in Übereinstimmung mit dem ersten Anzeigeattribut angezeigt wird.

15. Verfahren nach Anspruch 9, ferner umfassend:
Bestimmen, durch den mindestens einen Prozessor, ob das mindestens eine der Anzahl des AR-Objekts und des Verhältnisses der Anzeigefläche des AR-Objekts größer oder gleich einem vorbestimmten zweiten Schwellenwert ist, der größer als der vorbestimmte erste Schwellenwert ist;
basierend darauf, dass das mindestens eine der Anzahl des AR-Objekts und des Verhältnisses der Anzeigefläche des AR-Objekts größer oder gleich dem vorbestimmten zweiten Schwellenwert ist, Bestimmen, durch den mindestens einen Prozessor, eines dritten repräsentativen Pixelwerts für den gesamten Bereich des Bildes; und
Anzeigen, durch den mindestens einen Prozessor, des AR-Objekts als Umriss in Übereinstimmung mit einem dritten Anzeigeattribut, das eine Farbe verwendet, die eine komplementäre Beziehung zu dem dritten repräsentativen Pixelwert hat.

## Revendications

1. Dispositif électronique (101a, 101b, 101c, 101, 901, 103, 902, 904) comprenant :
au moins une caméra (105, 133, 231) ;
un affichage (103, 210) ; et
au moins un processeur (921, 923, 920, 902) couplé électriquement à l'au moins une caméra et à l'affichage,
dans lequel l'au moins un processeur est configuré pour :
acquérir une image (300) à l'aide de l'au moins une caméra ;
en se basant sur le fait que l'image est acquise, identifier au moins un d'un nombre d'objets de réalité augmentée (AR) (2, 410, 430, 420) à afficher à l'aide de l'affichage, et d'un rapport entre une zone d'affichage de l'objet AR et une résolution de l'affichage ;
en se basant sur le fait que l'au moins un du nombre d'objets AR et du rapport de la zone d'affichage de l'objet AR sont supérieurs ou égaux à un premier seuil prédéterminé, déterminer d'afficher l'objet AR comme un contour (413a, 411a, 433a, 431a) à l'aide de l'affichage ;
**caractérisé en ce que** l'au moins un processeur est en outre configuré pour :
en se basant sur le fait que l'objet AR est déterminé à être affiché en tant que contour, déterminer au moins une première valeur de pixel représentative pour l'objet AR ;
déterminer une deuxième valeur de pixel représentative pour la présentation d'une première région (510, 530) de l'image correspondant à une position d'affichage de l'objet AR à l'aide de l'affichage ;
en se basant sur le fait qu'une différence entre l'au moins une première valeur de pixel représentative et la deuxième valeur de pixel représentative n'est pas comprise dans une plage de seuil prédéterminée, afficher l'objet AR en tant que contour conformément à un premier attribut d'affichage qui utilise l'au moins une première valeur de pixel représentative à l'aide de l'affichage ; et
en se basant sur le fait que la différence entre l'au moins une première valeur de pixel représentative et la deuxième valeur de pixel représentative est comprise dans la plage de seuil prédéterminée, afficher l'objet AR en tant que contour conformément à un deuxième attribut d'affichage différent du premier attribut d'affichage à l'aide de l'affichage.

2. Dispositif électronique de la revendication 1, dans lequel l'au moins un processeur est configuré pour :
diviser l'objet AR en au moins une section qui est définie en fonction du contour ; et
déterminer la première valeur représentative du pixel pour chacune de l'au moins une section.

3. Dispositif électronique de la revendication 2, dans lequel l'au moins un processeur est configuré pour :
en se basant sur une valeur représentative ou une valeur moyenne de valeurs RGB de l'affichage pour présenter chacune de l'au moins une section à l'aide de l'affichage, déterminer la première valeur de pixel représentative pour chacune de l'au moins une section ; et
en se basant sur une valeur YCbCr obtenue par conversion de la valeur représentative ou de la valeur moyenne des valeurs RGB, déterminer la première valeur de pixel représentative pour chacune de l'au moins une section.

4. Dispositif électronique de la revendication 1, dans lequel l'au moins un processeur est configuré pour :
en se basant sur une valeur représentative ou une valeur moyenne des valeurs RGB de l'affichage pour présenter la première région de l'image à l'aide de l'affichage, déterminer la deuxième valeur de pixel représentative pour la première région de l'image ; ou
en se basant sur une valeur YCbCr convertie à partir de la valeur représentative ou de la valeur moyenne des valeurs RGB, déterminer la deuxième valeur de pixel représentative pour la première région de l'image.

5. Dispositif électronique de la revendication 2,
dans lequel l'au moins une section comprend une première section et une deuxième section, et
dans lequel l'au moins un processeur est configuré pour :
déterminer si une différence entre la première valeur de pixel représentative déterminée pour la première section et la deuxième valeur de pixel représentative pour la première région de l'image est incluse dans la plage de seuils prédéterminée ; et
déterminer si la différence entre la première valeur de pixel représentative déterminée pour la deuxième section et la deuxième valeur de pixel représentative pour la première région de l'image est incluse dans la plage de seuils prédéterminée.

6. Dispositif électronique de la revendication 5, dans lequel l'au moins un processeur est configuré pour :
en se basant sur le fait que la différence entre la première valeur de pixel représentative déterminée pour la première section et la deuxième valeur de pixel représentative pour la première région de l'image n'est pas incluse dans la plage de seuils prédéterminée, afficher un premier contour définissant la première section conformément au premier attribut d'affichage ; et
en se basant sur le fait que la première valeur de pixel représentative déterminée pour la deuxième section et la deuxième valeur de pixel représentative pour la première région de l'image est incluse dans la plage de seuils prédéterminée, afficher un deuxième contour définissant la deuxième section conformément au deuxième attribut d'affichage.

7. Dispositif électronique de la revendication 6, dans lequel l'au moins un processeur est configuré pour :
afficher le deuxième contour définissant la deuxième section conformément au deuxième attribut d'affichage qui utilise une couleur ayant une relation de couleur complémentaire avec la première valeur de pixel représentative déterminée pour la deuxième section ;
afficher le deuxième contour définissant la deuxième section conformément au deuxième attribut d'affichage qui utilise une épaisseur plus importante que le premier contour affiché conformément au premier attribut d'affichage ; ou
afficher le deuxième contour définissant la deuxième section conformément au deuxième attribut d'affichage qui utilise une luminosité plus élevée ou une saturation plus élevée que le premier contour affiché conformément au premier attribut d'affichage.

8. Dispositif électronique de la revendication 1, dans lequel l'au moins un processeur est configuré pour :
déterminer si au moins l'un du nombre de l'objet AR et du rapport de la zone d'affichage de l'objet AR sont supérieurs ou égaux à un deuxième seuil prédéterminé supérieur au premier seuil prédéterminé ;
en se basant sur le fait que l'au moins un du nombre de l'objet AR et du rapport de la zone d'affichage de l'objet AR est supérieur ou égal au deuxième seuil prédéterminé, déterminer une troisième valeur de pixel représentative pour l'ensemble de la région de l'image ; et
afficher l'objet AR en tant que contour conformément à un troisième attribut d'affichage qui utilise une couleur ayant une relation complémentaire avec la troisième valeur de pixel représentative.

9. Procédé d'affichage d'un objet AR (2, 410, 430, 420) d'un dispositif électronique (101a, 101b, 101c, 101, 901, 103, 902, 904), le procédé comprenant :
acquérir, par au moins un processeur (921, 923, 920, 902) du dispositif électronique, une image (300) en utilisant au moins une caméra (105, 133, 231) du dispositif électronique ;
en se basant sur le fait que l'image est acquise, identifier par l'au moins un processeur, au moins un d'un nombre de l'objet AR à afficher en utilisant l'affichage du dispositif électronique et d'un rapport entre une zone d'affichage (230, 510, 530) de l'objet AR et une résolution de l'affichage ;
en se basant sur le fait que l'au moins du nombre d'objets AR et du rapport de la zone d'affichage de l'objet AR sont supérieurs ou égaux à un premier seuil prédéterminé, déterminer, par l'au moins un processeur, d'afficher l'objet AR sous forme d'un contour en utilisant l'affichage ;
le procédé étant caractérisé en comprenant en outre :
en se basant sur le fait que l'objet AR est déterminé à être affiché en tant que contour, en déterminant, par l'au moins un processeur, au moins une première valeur de pixel représentative pour l'objet AR ;
déterminer, par l'au moins un processeur, une deuxième valeur de pixel représentative pour présenter une première région de l'image correspondant à une position d'affichage de l'objet AR en utilisant l'affichage ;
en se basant sur le fait qu'une différence entre l'au moins une première valeur de pixel représentative et la deuxième valeur de pixel représentative n'est pas comprise dans un seuil prédéterminé, afficher, par l'au moins un processeur, l'objet AR en tant que contour conformément à un premier attribut d'affichage qui utilise l'au moins une première valeur de pixel représentative à l'aide de l'affichage ; et
en se basant sur le fait que la différence entre l'au moins une première valeur de pixel représentative et la deuxième valeur de pixel représentative est comprise dans la plage de seuils prédéterminée, afficher, par l'au moins un processeur, l'objet AR en tant que contour conformément à un deuxième attribut d'affichage différent du premier attribut d'affichage à l'aide de l'affichage.

10. Procédé selon la revendication 9, dans lequel la détermination de l'au moins une première valeur de pixel représentative pour l'objet AR comprend :
diviser, par l'au moins un processeur, l'objet AR en au moins une section définie en fonction du contour ; et
déterminer, par l'au moins un processeur, la première valeur de pixel représentative pour chacun de l'au moins une section.

11. Procédé selon la revendication 10, dans lequel la détermination de la première valeur de pixel représentative pour chacune de l'au moins une section comprend :
en se basant sur une valeur représentative ou une valeur moyenne de valeurs RGB de l'affichage pour présenter chacune de l'au moins une section en utilisant l'affichage, déterminer, par l'au moins un processeur ; la première valeur de pixel représentative pour chacune de l'au moins une section ; et
en se basant sur une valeur YCbCr obtenue par conversion de la valeur représentative ou de la valeur moyenne des valeurs RGB, déterminer, par l'au moins un processeur, la première valeur de pixel représentative pour chacune de l'au moins une section.

12. Procédé de la revendication 9, dans lequel la détermination de la deuxième valeur de pixel représentative de la première région de l'image comprend :
en se basant sur une valeur représentative ou une valeur moyenne des valeurs RGB de l'affichage pour présenter la première région de l'image à l'aide de l'affichage, afficher, par l'au moins un processeur, la deuxième valeur de pixel représentative pour la première région de l'image ; ou
en se basant sur une valeur YCbCr convertie à partir de la valeur représentative ou de la valeur moyenne des valeurs RGB, déterminer, par l'au moins un processeur, la deuxième valeur de pixel représentative pour la première région de l'image.

13. Procédé de la revendication 10,
dans lequel l'au moins une section comprend une première section et une deuxième section, et
dans lequel la détermination de la première valeur de pixel représentative pour chacune de l'au moins une section comprend :
en se basant sur le fait que la différence entre la première valeur de pixel représentative déterminée pour la première section et la deuxième valeur de pixel représentative pour la première région de l'image n'est pas incluse dans la plage de seuil prédéterminée, afficher, par l'au moins un processeur, un premier contour définissant la première section conformément au premier attribut d'affichage ; et
en se basant sur le fait que la première valeur de pixel représentative déterminée pour la deuxième section et la deuxième valeur de pixel représentative pour la première région de l'image est incluse dans la plage de seuil prédéterminée, afficher, par l'au moins un processeur, un deuxième contour définissant la deuxième section conformément au deuxième attribut d'affichage.

14. Procédé de la revendication 13, dans lequel l'affichage du deuxième contour définissant la deuxième section en fonction du deuxième attribut d'affichage comprend :
afficher, par l'au moins un processeur, le deuxième contour définissant la deuxième section conformément au deuxième attribut d'affichage qui utilise une couleur ayant une relation de couleur complémentaire avec la première valeur de pixel représentative déterminée pour la deuxième section ;
afficher, par l'au moins un processeur, le deuxième contour définissant la deuxième section conformément au deuxième attribut d'affichage qui utilise une épaisseur plus importante que le premier contour affiché conformément au premier attribut d'affichage ; ou
afficher, par l'au moins un processeur, le deuxième contour définissant la deuxième section conformément au deuxième attribut d'affichage qui utilise une luminosité plus élevée ou une saturation plus élevée que le premier contour affiché conformément au premier attribut d'affichage.

15. Procédé de la revendication 9, comprenant en outre :
déterminer, par l'au moins un processeur, si l'au moins un du nombre de l'objet AR et du rapport de la zone d'affichage de l'objet AR est supérieur ou égal à un deuxième seuil prédéterminé supérieur au premier seuil prédéterminé ;
en se basant sur le fait que l'au moins un du nombre de l'objet de réalité augmentée et du rapport de la zone d'affichage de l'objet de réalité augmentée sont supérieurs ou égaux au deuxième seuil prédéterminé, déterminer, par l'au moins un processeur, une troisième valeur de pixel représentative pour l'ensemble de la région de l'image ; et
afficher, par l'au moins un processeur, l'objet AR en tant que contour conformément à un troisième attribut d'affichage qui utilise une couleur ayant une relation complémentaire avec la troisième valeur de pixel représentative.
